(19) Europäisches Patentamt
European Patent Office
Office européen des brevets

(11) **EP 2 517 286 B1**

(12) **FASCICULE DE BREVET EUROPEEN**

(45) Date de publication et mention de la délivrance du brevet:
**23.04.2014 Bulletin 2014/17**

(21) Numéro de dépôt: **10792945.7**

(22) Date de dépôt: **21.12.2010**

(51) Int Cl.:
*H01M 2/16* (2006.01)      *H01M 10/052* (2010.01)
*C08J 5/18* (2006.01)      *C08L 23/10* (2006.01)
*C08L 23/14* (2006.01)      *C08L 53/00* (2006.01)

(86) Numéro de dépôt international:
**PCT/EP2010/070409**

(87) Numéro de publication internationale:
**WO 2011/076805 (30.06.2011 Gazette 2011/26)**

(54) **FILM DE SEPARATEUR, SON PROCEDE DE FABRICATION, SUPERCONDENSATEUR, BATTERIE ET CONDENSATEUR MUNIS DU FILM**

SEPARATORFILM, SEIN HERSTELLUNGSVERFAHREN, SUPERKONDENSATOR, BATTERIE UND KONDENSATOR ENTHALTEND DIESEN FILM

SEPARATOR FILM, ITS PRODUCTION PROCESS, SUPERCONDENSER, BATTERY AND CONDENSOR CONTAINING THIS FILM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2009 FR 0959313**

(43) Date de publication de la demande:
**31.10.2012 Bulletin 2012/44**

(73) Titulaire: **Bollore
29500 Ergué Gabéric (FR)**

(72) Inventeurs:
• **AZAIS, Philippe**
  **F-29000 Quimper (FR)**
• **TAMIC, Lucien**
  **F-29500 Ergue Gaberic (FR)**
• **HUITRIC, André**
  **F-29500 Ergue Gaberic (FR)**
• **PAULAIS, Frédéric**
  **F-29000 Quimper (FR)**
• **ROHEL, Xavier**
  **F-29000 Quimper (FR)**

(74) Mandataire: **Regimbeau
Espace Performance Bâtiment K
35769 St-Grégoire Cedex (FR)**

(56) Documents cités:
**EP-A1- 2 018 962      EP-A2- 0 492 942**

• **DATABASE WPI Week 200870 Thomson Scientific, London, GB; AN 2008-L92938 XP002595214, -& JP 2008 201814 A (TORAY IND INC) 4 septembre 2008 (2008-09-04) cité dans la demande**

EP 2 517 286 B1

## Description

L'invention concerne un film de séparateur pour dispositif servant à emmagasiner de l'énergie électrique, le film étant poreux et orienté.

Ainsi des applications visées sont par exemple les supercondensateurs électriques fonctionnant soit en milieu aqueux soit en milieu organique, les batteries électriques et piles électriques, et particulièrement les piles primaires et batteries secondaires lithium-ion et métal polymère, ainsi que les condensateurs électrolytiques.

Les membranes séparatrices utilisées dans les systèmes de stockage d'énergie électrique sont de plusieurs types et sont fonction des performances recherchées.

Dans les cas des supercondensateurs, le séparateur le plus utilisé est en cellulose. Les performances recherchées sont une très haute porosité, une isotropie des pores dans la structure, une bonne stabilité électrochimique et chimique vis-à-vis des électrolytes utilisés, une épaisseur inférieure à 35$\mu$m et une faible déformation lors sa mise en oeuvre dans le composant (bobinage, par exemple). Des études menées récemment ont clairement démontrées que le séparateur est une source potentielle de vieillissement du supercondensateur : celui se dégrade progressivement au cours du vieillissement, réagit en fonction de la polarité de l'électrode (vieillissement électrochimique) et est générateur de gaz. Cependant, les séparateurs à base de polymères posent quelques problèmes : soit ils ne sont pas suffisamment poreux (cas de séparateurs proposés dans le domaine du lithium-ion, par exemple), soit ils ne sont pas suffisamment stable électrochimiquement, soit ils sont trop déformables mécaniquement (caractère plastique des polymères).

Dans le cas des batteries fonctionnant en milieu organique, comme par exemple les batteries lithium-ion, le séparateur doit être relativement fin (généralement inférieur ou égal à 25$\mu$m), ne pas interagir avec les électrolytes organiques ni avec les composants des électrodes (surtout le lithium métallique et les ions lithium), supporter des tensions élevées (supérieur à 3V), mais dans le même temps, il doit assurer une parfaite isolation électrique entre les deux électrodes pour éviter tout risque de court-circuit. Les séparateurs développés pour le domaine du lithium-ion sont réalisés généralement à partir de polyoléfines par mono-étirage à froid avec ou sans charge minérale. Ces séparateurs présentent généralement l'inconvénient d'être peu résistants mécaniquement et très déformables. Pour éviter les problèmes inhérents à l'étirage à froid qui présente l'inconvénient de réaliser des trous dans le sens de l'épaisseur du séparateur, une solution consiste à réaliser une extrusion multicouches de type PP/PE/PP. Ce dernier type de séparateur est particulièrement onéreux mais présente des caractéristiques intéressantes. D'autres types de séparateurs incluant également des céramiques ont également été mis au point pour ce type d'application mais le prix de réalisation est particulièrement limitant pour leur implantation dans la technologie. Enfin, des séparateurs pour batteries à base de polypropylène et utilisant un agent béta-nucléant sont connus mais n'ont pas un comportement mécanique suffisant car ils ne contiennent que du polypropylène.

Dans le domaine des batteries plomb-acide, le séparateur généralement utilisé est en fibre de verre, essentiellement pour des raisons de tenue aux électrolytes aqueux corrosifs, mais les performances sont médiocres en raison de la forte épaisseur de ce type de séparateur (supérieur à 40$\mu$m, généralement) et la taille de pores est trop élevée (> 5$\mu$m). Pour cette raison, des séparateurs associant charges minérales et polyoléfines ont également été développés. On trouve également des développements de séparateurs multicouches pour répondre à ces problématiques. Cependant, ces séparateurs présentent également des problèmes de déformations mécaniques lors du vieillissement du composant et / ou lors de leur mise en oeuvre.

Dans le cas des condensateurs électrolytiques, le séparateur est généralement en cellulose pour des raisons de facilité d'imprégnation. Le principe de fonctionnement du condensateur électrolytique est le suivant : premièrement, si l'on fait circuler un courant entre les deux électrodes (anode et cathode) en aluminium plongeant dans l'électrolyte (par exemple : solution d'acide borique), l'électrolyse provoque la formation d'une couche d'oxyde d'aluminium (alumine $Al_2O_3$) à la surface de l'anode. Deuxièmement, l'alumine étant un isolant, on obtient un condensateur dont le diélectrique est la couche d'alumine, une armature étant constituée par l'anode et l'autre par l'électrolyte, la cathode ne servant que de connexion avec l'électrolyte. C'est cet isolant diélectrique qui permet d'amincir considérablement le diélectrique par rapport à la technologie utilisée dans les condensateurs diélectriques réalisés à partir de polypropylène. Enfin, la capacité du condensateur dépend de l'épaisseur de la couche d'alumine ainsi que de la surface des électrodes. Pour augmenter celle-ci, il est possible de "graver" l'anode en l'attaquant chimiquement avant formation de la couche d'oxyde. De ce fait, compte tenu de la tension de fonctionnement de ces composants (jusqu'à quelques centaines de volts), on ajoute un voire plusieurs séparateurs cellulosiques entre l'anode et la cathode. Néanmoins, la tension de claquage de ces séparateurs est relativement faible, d'où la nécessité de parfois recourir à plusieurs couches de séparateurs. Cependant, les séparateurs polymériques étant généralement difficilement imprégnables en raison de leur structure, ils ne peuvent pas être utilisés dans cette application. Compte tenu du principe de fonctionnement de cette technologie, il est évident que la cathode, qui ne joue pas de rôle primordial dans le stockage d'énergie, constitue une perte de volume et de masse dans le composant. L'épaisseur de cette feuille de cathode est généralement comprise entre 15 et 60$\mu$m et est également gravée électrochimiquement pour augmenter la surface de contact avec l'électrolyte.

Les membranes en polypropylène réalisées à partir de précurseurs béta-nucléés sont connues.

Généralement, les agents nucléants utilisés sont de trois catégories : soit il s'agit de carboxylate d'alcalino-terreux à chaine relativement longue comme par exemple de plus de 10 carbones linéaires successifs selon le document US-A-2005/212 183, soit il s'agit de nanoparticules d'oxydes métalliques comme par exemple selon le document EP-A-1 511 797, ou de carbonate de calcium, soit il s'agit de molécules organiques plus complexes comme par exemple des cycloamides selon le document US-A-7 235 203 ou des amines cycliques selon le document US-A-3 563 971.

Le document EP-B-492942 décrit un film poreux et orienté, d'une composition polymérique comprenant :

(1) un composant ethylene-propylene, le composant A, présent à raison de 5 à 95 parties en poids et qui est un copolymère bloc éthylène-propylène ayant une teneur en ethylène de 10 à 50 % en poids,
(2) un composant propylène, constitué de

(i) 95 à 5 parties en poids d'un composant B, qui est un homopolymère ou un copolymère statistique de propylène ayant jusqu'à 10% en poids d'un comonomère d'ethylène ou d'une alpha-oléfine de 4 à 8 atomes de carbone,
(ii) et comprenant éventuellement jusqu'à 20 parties en poids pour 100 parties en poids des composants A et B, d'un composant C, qui est un homopolymère de polypropylène de bas poids moléculaire ayant une viscosité à l'état fondu de 50 à 1000 poises mesurée à un taux de cisaillement de 136 s$^{-1}$ et à 190 °C et où le composant C peut être fourni par le composant B lorsque le composant B a une distribution de poids moléculaire si large que la portion du composant C requise dans la composition polymère est comprise dans la quantité de matériau de bas poids moléculaire du composant B ;

(3) 0 à 30 parties en poids pour 100 parties en poids de composants A et B, d'un composant D comprenant du carbonate de calcium, et
(4) 0 à 50 ppm pour 100 parties en poids de composants A et B, d'un composant E comprenant un agent de nucléation produisant des béta - sphérulites à condition que lorsque le rapport en poids du composant A au composant B soit de 5 à 30/95 à 70, le composant E soit présent à raison de 0.1 à 10 ppm, et que lorsque le rapport en poids du composant A au composant B est de 5 à 30/95 à 70, le composant C est présent à raison de :

(a) 5 à 20 parties en poids lorsque la composition polymère est pratiquement dépourvue de composant D ou de composants D et E, et
(b) 1 à 10 parties en poids lorsque la composition polymère comprend 0.1 à 10 ppm de composant E et 5 à 30 parties en poids de composant D.

Selon le document EP-B-492942, la porosité de tels films n'est supérieure à 55 % que pour des épaisseurs d'au moins 25 micromètres. Ainsi les exemples 13-1, 13-2, 13-3 et 13-4 du document EP-B-492942 prévoient un film obtenu par étirage dans une direction longitudinale et dans une direction transversale à la direction longitudinale, d'une composition de 70 % en poids du copolymère éthylène - propylène, de 20 % en poids de polypropylène / carbonate de calcium pour avoir 8 % en poids de carbonate de calcium dans la composition, 10 % en poids de polypropylène de bas poids moléculaire et de 2 ppm de colorant de rouge quinacridone, ayant une porosité respectivement de 59.8, 58.9, 59.2 et 62.2 pour des épaisseurs de 5.6 x10$^{-2}$ mm, 7.1 x10$^{-2}$ mm, 6.9 x10$^{-2}$ mm et 4.8 x10$^{-2}$ mm. En revanche, pour l'exemple le d'un film obtenu par étirage dans une direction longitudinale et dans une direction transversale à la direction longitudinale, d'une composition en des proportions non précisées d'un copolymère éthylène - propylène, d'un homopolymère de polypropylène et de 1.5 ppm de colorant de rouge quinacridone, la porosité chute à 51.3 % pour une épaisseur de 19 micromètres, alors que la porosité pour la même composition des exemples 1a, 1b, 1c et 1d est respectivement de 58.0, 53.0, 58.4 et 56.2 pour des épaisseurs de 3.94 x10$^{-2}$ mm, 3.66 x10$^{-2}$ mm, 3.30 x10$^{-2}$ mm et 2.54 x$^{10-2}$ mm.

Le document EP-B-492 942 mentionne que le film qui y est décrit peut avoir un grand nombre d'applications, y compris comme séparateurs dans des cellules électrochimiques.

Toutefois pour les applications électriques indiquées ci-dessus, le film selon le document EP-B-492 942 présente une porosité insuffisante pour de faibles épaisseurs et n'a pas une suffisamment bonne stabilité mécanique et thermique en tant que séparateur d'un dispositif de stockage d'énergie électrique.

Le document JP-A-2008 201 814 prévoit, pour avoir un film de polypropylène poreux ayant une grande perméabilité tout en gardant la productivité et la résistance mécanique et pour avoir un dispositif de batterie capable de réduire la résistance interne, que le film poreux de polypropylène contient de 0.01 % à 0.5 % en poids d'un composé d'amide basé sur la résine de polypropylène et de 0.01 % à 0.1 % en poids d'un composé de quinacridone basé sur la résine de polypropylène.

Le film selon ce document JP-A-2008 201 814 n'a pas non plus une suffisamment bonne stabilité mécanique et thermique pour une utilisation en tant que séparateur d'un dispositif de stockage d'énergie électrique.

L'invention vise à obtenir un film tel qu'indiqué au début, qui pallie les inconvénients de l'état de la technique.

En particulier, on cherche à avoir un film de séparateur convenant comme séparateur d'un dispositif servant à emmagasiner de l'énergie électrique, telles que par exemple les dispositifs indiqués au début.

En particulier, comme film poreux, le film avoir un suffisamment bas retrait thermique, du fait qu'il devra pouvoir subir des échauffements au cours de sa vie dans le dispositif servant à emmagasiner de l'énergie électrique, du simple fait de l'utilisation du dispositif par exemple pour stocker l'énergie électrique, se charger et se décharger en énergie électrique, ou du simple fait d'une grande température maximum prescrite d'utilisation du dispositif servant à emmagasiner de l'énergie électrique.

En outre, le film doit pouvoir être fabriqué sans ruptures répétitives.

L'objet de la présente invention est la réalisation d'un film réalisé par bi-étirage à chaud comportant un agent béta-nucléant pour des applications de stockage d'énergie.

Un premier objet de l'invention est un film de séparateur pour dispositif servant à emmagasiner de l'énergie électrique suivant la revendication 1, le film étant poreux et orienté, le film étant obtenu par étirage dans une direction longitudinale et dans une direction transversale à la direction longitudinale, le film contenant un mélange comportant un homopolymère de polypropylène,

au moins 10 % en poids d'au moins un copolymère de monomères comprenant au moins du propylène et de l'éthylène, au moins un agent béta-nucléant,

caractérisé en ce que

le copolymère a une proportion d'éthylène supérieure ou égale à 1 % et inférieure à 10 % en poids du copolymère et une proportion de propylène d'au moins 90 % en poids du copolymère pour une épaisseur micrométrique du film supérieure ou égale à 8 micromètres et inférieure ou égale à 30 micromètres correspondant à un facteur d'espace déterminé selon la norme IEC-60674-3-1 supérieur ou égal à 145 % et une masse volumique du film étiré dans les deux directions supérieure ou égale à $0.18$ g/cm$^3$ et inférieure ou égale à $0.41$ g/cm$^3$.

Suivant un mode de réalisation, le mélange comporte au moins 50 % en poids dudit au moins un copolymère de monomères comprenant au moins du propylène et de l'éthylène.

Suivant un mode de réalisation, le copolymère a une proportion d'éthylène supérieure ou égale à 5 %.

Suivant un mode de réalisation, le facteur d'espace déterminé selon la norme IEC-60674-3-1 est supérieur ou égal à 150 %.

Suivant un mode de réalisation, le facteur d'espace déterminé selon la norme IEC-60674-3-1 est supérieur ou égal à 200 %.

Suivant un mode de réalisation de l'invention, l'agent béta-nucléant contient de la quinacridone.

Suivant un mode de réalisation de l'invention, l'agent béta-nucléant est constitué de gamma - quinacridone.

Suivant un mode de réalisation de l'invention, l'agent béta-nucléant est constitué de gamma - quinacridone présente en une proportion supérieure ou égale à 0.11 % et inférieure ou égale à 0.5 % en poids.

Suivant un mode de réalisation de l'invention, le copolymère d'éthylène comprend du butène.

Suivant un mode de réalisation de l'invention, la proportion de butène dans le mélange est non nulle et inférieure ou égale à 1 % en poids.

Suivant un mode de réalisation de l'invention, l'épaisseur micrométrique du film est inférieure ou égale à 25 micromètres.

Suivant un mode de réalisation de l'invention, l'épaisseur micrométrique du film est inférieure ou égale à 20 micromètres.

Suivant un mode de réalisation de l'invention, le film étiré dans les deux directions a une masse surfacique dans les deux directions inférieure ou égale à $0.400$ g/cm$^2$ et notamment inférieure à $0.3$ g/cm$^2$.

Suivant un mode de réalisation de l'invention, le film étiré dans les deux directions a une porosité de type Gurley supérieure ou égale à 50 secondes et inférieure ou égale à 300 secondes pour 100 cm$^3$.

Suivant un mode de réalisation de l'invention, le film étiré dans les deux directions a une porosité de type Gurley supérieure ou égale à 80 secondes et inférieure ou égale à 130 secondes pour 100 cm$^3$, et peut notamment être inférieure ou égale à 120 secondes pour 100 cm$^3$.

Suivant un mode de réalisation de l'invention, le film étiré dans les deux directions a une porosité en pourcentage supérieure ou égale à 50 %.

Suivant un mode de réalisation de l'invention, le film étiré dans les deux directions a une porosité en pourcentage supérieure ou égale à 55 %, ou à 60 %.

Suivant un mode de réalisation de l'invention, le film a une tension de claquage supérieure ou égale à 330 V/$\mu$m en épaisseur micrométrique.

Suivant un mode de réalisation de l'invention, le film a un module d'élasticité longitudinal supérieur ou égal à 600 MPa ou à 800 MPa, selon la norme ASTM D882.

Suivant un mode de réalisation de l'invention, le film a un module d'élasticité transversal supérieur ou égal à 300 MPa, selon la norme ASTM D882.

Suivant un mode de réalisation de l'invention, le film a une résistance à la rupture supérieure ou égale à 20 MPa.

Suivant un mode de réalisation de l'invention, le mélange comporte en outre du stéarate de calcium en une proportion de 25 à 250mg/kg du mélange.

Suivant un mode de réalisation de l'invention, le retrait transversal du film d'épaisseur micrométrique inférieure ou égale à 20$\mu$m à 120°C est inférieur à 8%.

Suivant un mode de réalisation de l'invention, le retrait transversal du film d'épaisseur micrométrique 20$\mu$m $\pm$ 1$\mu$m à 120°C est inférieur à 8%.

Suivant un mode de réalisation de l'invention, le retrait transversal du film d'épaisseur micrométrique 20$\mu$m $\pm$ 1$\mu$m à 135°C est inférieur à 18%.

Suivant un mode de réalisation de l'invention, le retrait transversal du film d'épaisseur micrométrique 15$\mu$m $\pm$ 1$\mu$m à 120°C est inférieur à 7%.

Suivant un mode de réalisation de l'invention, pour une température supérieure ou égale à 150°C, le film a une porosité Gurley supérieure ou égale à 5000 secondes.

Un deuxième objet de l'invention est un procédé de fabrication du film tel que décrit ci-dessus, dans lequel au cours d'une première étape on fait passer ledit mélange à l'état fondu sur un tambour (CR, 13) refroidisseur de coulée, qui est mis en rotation et qui a une température inférieure à la température du mélange à l'état fondu pour obtenir un film primaire (F), on étire le film primaire (F) dans sa direction longitudinale (MD) d'avancée au cours d'une deuxième étape après la première étape, on étire le film (F) dans la direction (TD) transversale à la direction longitudinale (MD), caractérisé en ce que lors de la première étape, ledit mélange à l'état fondu a un temps de contact avec le tambour (CR, 13) refroidisseur de coulée supérieur ou égal à 30 secondes, et notamment supérieur ou égal à 85 secondes.

Un objet de l'invention est un procédé de fabrication d'un film de séparateur pour dispositif servant à emmagasiner de l'énergie électrique, le film étant poreux et orienté, le film contenant un mélange comportant
un homopolymère de polypropylène,
au moins 10 % en poids d'au moins un copolymère de monomères comprenant au moins du propylène et de l'éthylène,
au moins un agent béta-nucléant,
le copolymère ayant une proportion d'éthylène supérieure ou égale à 1 % et inférieure à 10 % en poids du copolymère et une proportion de propylène d'au moins 90 % en poids du copolymère,
procédé dans lequel, au cours d'une première étape on fait passer ledit mélange à l'état fondu sur un tambour (CR, 13) refroidisseur de coulée, qui est mis en rotation et qui a une température inférieure à la température du mélange à l'état fondu pour obtenir un film primaire (F), on étire le film primaire (F) dans sa direction longitudinale (MD) d'avancée au cours d'une deuxième étape après la première étape, on étire le film (F) dans la direction (TD) transversale à la direction longitudinale (MD), le procédé étant caractérisé en ce que lors de la première étape, ledit mélange à l'état fondu a un temps de contact avec le tambour (CR, 13) refroidisseur de coulée supérieur ou égal à 30 secondes.

Suivant un mode de réalisation de l'invention, lors de la deuxième étape, le film passe dans une deuxième zone (2) d'entrée d'étirage longitudinal par des deuxièmes rouleaux (20) d'entraînement suivant une vitesse d'entraînement du film (F) dans la direction longitudinale (MD) d'avancée, puis le film (F) passe dans une troisième zone (3) de sortie d'étirage longitudinal par des troisièmes rouleaux (30) entraînant le film (F) à une plus grande vitesse dans la direction longitudinale (MD) d'avancée que la vitesse d'entraînement du film (F) des deuxièmes rouleaux (20) dans la direction longitudinale (MD) d'avancée, caractérisé en ce que la température d'au moins un des deuxièmes rouleaux (20) dans la deuxième zone (2) d'entrée d'étirage longitudinal est supérieure ou égale à 45°C, et peut notamment être supérieure ou égale à 80 °C, et est inférieure ou égale à 110°C, et peut notamment être inférieure ou égale à 100 °C.

Suivant un mode de réalisation de l'invention, la température d'au moins un des deuxièmes rouleaux (20) dans la deuxième zone (2) d'entrée d'étirage longitudinal est supérieure ou égale à 80 °C et est inférieure ou égale à 110 °C.

Suivant un autre mode de réalisation de l'invention, la température d'au moins un des deuxièmes rouleaux (20) dans la deuxième zone (2) d'entrée d'étirage longitudinal est supérieure ou égale à 45 °C et est inférieure ou égale à 100 °C.

Suivant un mode de réalisation de l'invention, le tambour (CR, 13) refroidisseur de coulée a une température supérieure ou égale à 110 °C et inférieure ou égale à 145 °C pour un mélange à l'état fondu ayant une température de 235 °C à 260°C lors de la première étape.

Suivant un mode de réalisation de l'invention, lors de la deuxième étape, le film passe dans une deuxième zone (2) d'entrée d'étirage longitudinal par des deuxièmes rouleaux (20) d'entraînement suivant une vitesse d'entraînement du film (F) dans la direction longitudinale (MD) d'avancée, puis le film (F) passe dans une troisième zone (3) de sortie d'étirage longitudinal par des troisièmes rouleaux (30) entraînant le film (F) à une plus grande vitesse dans la direction longitudinale (MD) d'avancée que la vitesse d'entraînement du film (F) des deuxièmes rouleaux (20) dans la direction longitudinale (MD) d'avancée pour étirer el film dans la direction longitudinale (TD), caractérisé en ce que le taux (NIR) de réduction de la largeur transversale du film par étirage longitudinal entre la deuxième zone (2) d'entrée d'étirage longitudinal et la troisième zone (3) de sortie d'étirage longitudinal est supérieur ou égal à 0.20 et peut notamment être supérieur ou égal à 0.28.

Suivant un mode de réalisation de l'invention, le film a une première face (F10) de contact avec le tambour (CR, 13) refroidisseur de coulée et une deuxième face (F20) opposée à la première face (F10), caractérisé en ce que lors de la première étape, on fait passer sur la deuxième face (F20) une lame d'air ayant une température plus petite que la température du tambour (CR, 13) refroidisseur de coulée.

Un troisième objet de l'invention est un supercondensateur électrique, comportant au moins deux conducteurs électriques reliés à au moins deux bornes d'utilisation, dans lequel au moins un film poreux de séparateur tel que décrit ci-dessus et un électrolyte imprégnant le film se trouvent entre les deux conducteurs électriques.

Suivant un mode de réalisation de l'invention, les conducteurs électriques sont sous une forme bobinée avec le film poreux.

Un quatrième objet de l'invention est une batterie ou une pile de stockage d'énergie électrique, comportant au moins deux conducteurs électriques reliés à au moins deux bornes d'utilisation, dans lequel au moins un film poreux de séparateur tel que décrit ci-dessus et un électrolyte imprégnant le film se trouvent entre les deux conducteurs électriques.

Suivant un mode de réalisation de l'invention, les conducteurs électriques sont sous une forme bobinée avec le film poreux.

Un cinquième objet de l'invention est un condensateur électrolytique, comportant une anode (A) et une cathode (CATH), entre lesquels se trouvent au moins un film poreux de séparateur tel que décrit ci-dessus et un électrolyte imprégnant le film.

Suivant un mode de réalisation de l'invention, l'anode et la cathode sont sous une forme bobinée avec ledit au moins un film poreux.

Suivant un mode de réalisation de l'invention, la cathode est formée par un dépôt métallique (M) sur une seule face dudit au moins un film poreux. Le dépôt métallique est réalisé avec ou sans traitement plasma (gaz ionisé) préalable.

Suivant un mode de réalisation de l'invention, l'anode et la cathode sont sous une forme bobinée avec ledit au moins un film poreux, le condensateur comportant au moins une paire de deux dits films poreux (F1, F2) de séparateur, ayant chacun sur une seule face le dépôt métallique formant la cathode, les dépôts métalliques étant l'un contre l'autre, l'anode étant contre l'une des faces (F1) d'un desdits films poreux n'ayant pas de dépôt métallique.

Suivant un mode de réalisation de l'invention, l'anode et la cathode sont sous une forme bobinée avec ledit au moins un film poreux, le condensateur comportant au moins une paire de deux premier et deuxième dits films poreux (F1, F2) de séparateur, le premier film ayant sur une seule face le dépôt métallique formant la cathode, le dépôt métallique du premier film étant situé contre le deuxième film n'ayant pas de dépôt métallique, l'anode étant contre l'une des faces (F1) d'un desdits films poreux n'ayant pas dépôt métallique.

L'objectif de l'invention est aussi d'améliorer l'interaction (mouillabilité) du séparateur avec les solutions aqueuses (acides, basiques ou neutres).

L'invention sera mieux comprise à la lecture de la description qui va suivre, donnée uniquement à titre d'exemple non limitatif en référence aux dessins annexés, sur lesquels :

- la figure 1 représente une courbe de fusion de polypropylène,
- la figure 2 représente une courbe de fusion de polypropylène et de polyéthylène,
- la figure 3 est une vue schématique en perspective représentant une ligne de fabrication du film suivant l'invention,
- la figure 4 est un diagramme représentant la résistance à la contrainte en élongation d'un exemple de film suivant l'invention et de deux exemples comparatifs,
- la figure 5 est une vue au microscope électronique à balayage d'un exemple de film suivant l'invention,
- la figure 6 une vue au microscope électronique à balayage d'un exemple de film suivant l'invention des deux faces d'un exemple de film suivant l'invention,
- la figure 7 est une vue schématique en coupe illustrant le film suivant la figure 6,
- la figure 8 représente schématiquement la structure de principe d'un condensateur électrolytique,
- la figure 9 représente schématiquement la structure de principe d'un condensateur électrolytique pour son bobinage,
- la figure 10 représente schématiquement le bobinage d'un condensateur électrolytique suivant les figures 8 et 9 dans un premier mode de réalisation,
- la figure 11 représente schématiquement le bobinage d'un condensateur électrolytique suivant les figures 8 et 9 dans un deuxième mode de réalisation,
- la figure 12 représente schématiquement un principe de reprise de courant sur le condensateur électrolytique réalisé suivant la figure 11,
- la figure 13 représente une vue schématique en coupe d'un film à base de polypropylène, montrant deux types d'épaisseur du film,
- la figure 14 est un graphique représentant le retrait du film suivant un mode de réalisation de l'invention dans le sens longitudinal en fonction de la température,
- la figure 15 est un graphique représentant le retrait du film suivant le même mode de réalisation que la figure 14 dans le sens transversal en fonction de la température,

- la figure 16 est un graphique représentant le retrait du film suivant un autre mode de réalisation de l'invention dans le sens transversal en fonction de la température,
- la figure 17 est un graphique représentant le retrait du film suivant le même mode de réalisation que la figure 16 dans le sens longitudinal en fonction de la température,
- la figure 18 est un graphique représentant une mesure de porosité Gurley en secondes en fonction de la température dans un mode de réalisation du film.

Dans l'exemple décrit ci-dessous, on réalise un film contenant à la fois un homopolymère du polypropylène (PP), un copolymère du polyéthylène (PE), ainsi qu'un agent béta-nucléant, la gamma-quinacridone.

Les inventeurs se sont aperçus que la combinaison d'un grand facteur d'espace (Fe) et d'un intervalle de masse volumique du film était déterminante pour pouvoir appliquer le film comme séparateur d'un dispositif de stockage d'énergie électrique.

Le facteur Fe d'espace du film suivant l'invention est déterminé selon la norme IEC-60674-3-1.

Le facteur Fe d'espace du film suivant l'invention est supérieur ou égal à 150 %, et peut notamment être supérieur ou égal à 200 %.

La masse volumique du film suivant l'invention est supérieure ou égale à 0.18 g/cm$^3$ et inférieure ou égale à 0.41 glcm$^3$.

Le facteur Fe d'espace est donné par la formule suivante

$$Fe(\%) = \frac{MT - WT}{WT} \bullet 100$$

où WT est l'épaisseur gravimétrique ou épaisseur pesée,
MT est l'épaissseur micrométrique.

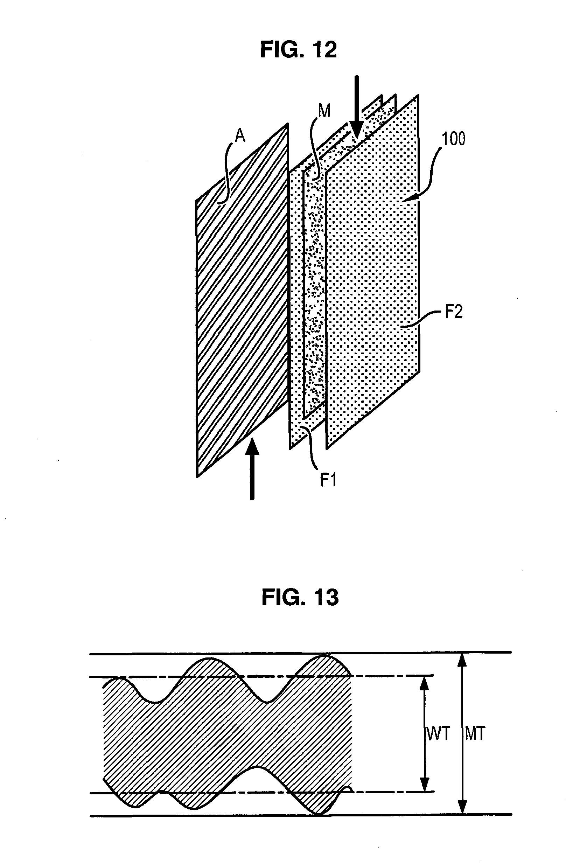

La figure 13 représente une vue schématique en coupe d'un film à base de polypropylène, montrant l'épaisseur gravimétrique WT et l'épaisseur micrométrique MT.

L'épaisseur micrométrique MT est la plus communément utilisée et représente l'épaisseur crête à crête du film, c'est-à-dire entre ses pics extrêmes les plus hauts et les plus bas.

Au contraire, l'épaisseur gravimétrique WT est déterminée par pesée et est inférieure à l'épaisseur micrométrique MT.

Méthode de détermination du facteur d'espace Fe sur un film

Le facteur d'espace Fe, l'épaisseur gravimétrique WT et l'épaisseur micrométrique MT sont déterminés suivant la norme internationale CEI 60674-3-1 (=IEC-60674-3-1).

On forme un échantillon de 12 couches du film, et on le découpe en utilisant un gabarit d'aire connue. L'échantillon est prélevé d'une bobine du film en coupant environ 0.5 mm de film à partir de la surface extérieure de la bobine, puis en prélevant 8 couches de film et en découpant à l'aide du gabarit. Le gabarit fait 250 mm x 500 mm.

L'épaisseur gravimétrique WT est déterminée en utilisant une échelle de pesée.

On utilise un micromètre pour mesurer l'épaisseur micrométrique MT L'épaisseur micrométrique MT est mesurée avec une surface active plane de 2 cm$^2$ et une force de 1.96 daN. Pour mesurer l'épaisseur micrométrique MT, on élimine les première et dernière couches pour travailler avec 8 couches. On effectue 10 mesures individuelles réparties sur la surface de l'échantillon. L'épaisseur micrométrique MT est la moyenne de ces 10 résultats.

Composition du film

La gamma-quinacridone comme agent nucléant est présente en une proportion inférieure à 2% en poids du mélange, notamment :

$$0{,}1\% < \text{Gamma} - \text{quinacridone} < 0{,}5\%.$$

Le copolymère est par exemple un terpolymère de propylène, d'éthylène et de butène.

Dans ce copolymère, la proportion en poids de propylène est supérieure ou égale à 90 % en poids du copolymère.

Dans ce copolymère, la proportion en poids d'éthylène est supérieure ou égale à 1%, et peut notamment être supérieure ou égale à 5 %, et est inférieure ou égale à 10 % en poids du copolymère.

Dans ce copolymère, la proportion en poids de butène est supérieure ou égale à 0,01 % et inférieure ou égale à 1 % en poids du copolymère.

Le mélange peut comporter également du stéarate de calcium, par exemple en une proportion de 25 à 250 mg/kg du mélange. Le stéarate de calcium neutralise les résidus de chlore présents dans le polypropylène lorsque celui-ci a été fabriqué à l'aide d'un catalyseur de Ziegler-Natta, ce qui est le cas dans les exemples de réalisation indiqués ci-dessous.

Dans un exemple de réalisation, le copolymère du polyéthylène comporte environ 9% de polyéthylène (PE). Les exemples suivants montrent qu'il est nécessaire d'utiliser à la fois un homopolymère du PP et un copolymère du PE.

Suivant un premier exemple de réalisation suivant l'invention, la composition du film a la première composition C1 où la proportion en poids d'éthylène est supérieure ou égale à 5 % (en poids), et ce par exemple dans les essais 1 à 29 avec la composition C1 suivante indiquée ci-dessous :

Polypropylène : $\geq$ 90% en poids du mélange,
Polyéthylène $\approx$ 6,5% en poids du mélange,
Butène $\approx$ 0.1 % environ en poids du mélange,
gamma-quinacridone = 0.2 % en poids du mélange.

Les essais 1 à 29 ci-dessous ont été réalisés avec un film ayant cette première composition C1.

Suivant un deuxième exemple de réalisation suivant l'invention, la composition du film a la deuxième composition C2 où la proportion en poids d'éthylène est supérieure ou égale à 1 % en poids et est inférieure ou égale à 5 % en poids, et ce par exemple dans les essais 30 à 44 et 101 à 110 avec la composition C2 suivante indiquée ci-dessous :

Polypropylène : $\geq$ 95 % en poids du mélange,
Polyéthylène $\approx$ 2 % en poids du mélange,
Butène $\approx$ 0.1% environ en poids du mélange,
gamma-quinacridone = 0.2 % en poids du mélange.

Les essais 1 à 110 ci-dessous ont été réalisés sur une extrudeuse monovis à partir de matières granulées. L'homopolyrnère permet l'obtention d'une matière robuste. Le copolymère présente l'avantage de donner une certaine ductibilité à la matière et donc d'obtenir un film homogène lors de l'étirage.

Les matières utilisées pour le film pour les essais ont été les suivantes :

Copolymère d'éthylène: Clyrell EC310K de Basell,
Homopolymère : Grade diélectrique résine PP HB311BF de Boréalis,

Agent béta-nucléant de gamma quinacridone en mélange maître de PP : MP 1113 (concentration de 2% de gamma quinacridone dans le mélange maître) de Mayzo.

Le pourcentage de formation des phases alpha et béta est une caractéristique pour l'obtention d'un film poreux réalisé à partir de polyoléfines.

<u>Méthode de détermination de la quantité de phase béta-nucléée par rapport à la phase alpha-nucléée</u>

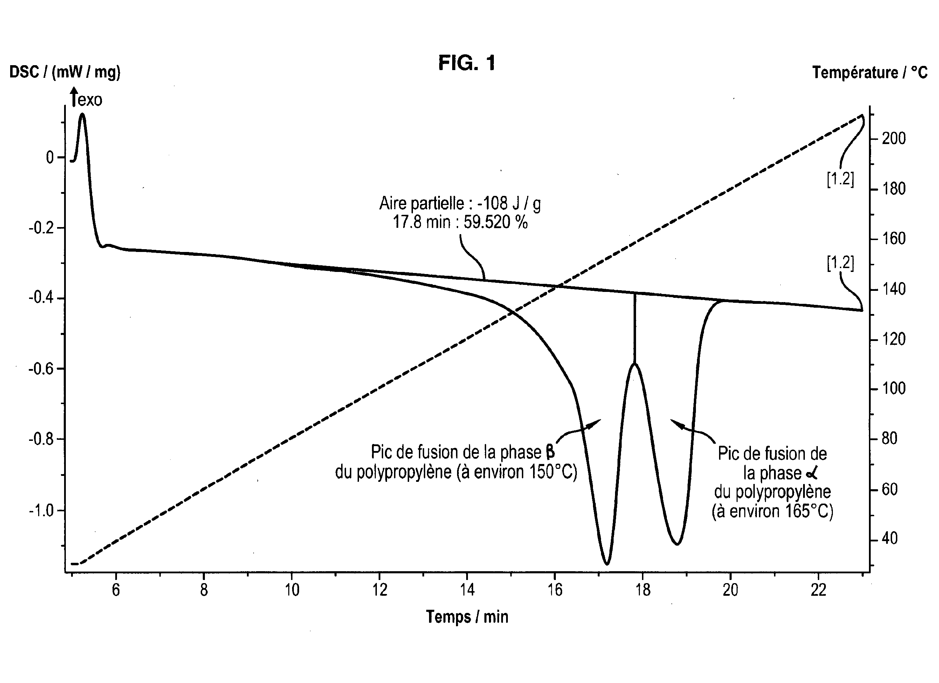

Pour plus de simplicité, cette méthode est d'abord décrite en référence à la figure 1 pour le cas d'un film de polypropylène sans copolymère d'éthylène. Cette mesure se fait par intégration de la courbe de fusion réalisée par DSC (Analyse calorimétrique à compensation de puissance ou « Differential Scanning Calorimetry » en anglais) sur le film primaire obtenu par extrusion selon la figure 1. Le film primaire est obtenu après cristallisation du polypropylène, récupéré après les rouleaux de maintien en température, c'est-à-dire juste avant l'étirage long. La cristallisation se faisant dès la sortie de filière, au niveau du rouleau refroidisseur (CR, en anglais « Chill Roll »), il est donc indispensable de cibler les paramètres cinétiques et thermiques idéaux du rouleau refroidisseur pour obtenir un film primaire riche en phase $\beta$. Les deux paramètres les plus importants sont donc la température et la vitesse de rotation du rouleau refroidisseur.

L'intégration de toute la courbe de fusion de la figure 1 donne la cristallinité totale du polymère. L'enthalpie mesurée vaut : $\Delta H = (\Delta H_{\alpha} + \Delta H_{\beta})$ (en J/g). Pour estimer le pourcentage de phase $\beta$ formée, une intégration partielle est possible.

Dans le cas de la figure 1, la valeur 59.5 % correspond à l'aire entourée par la courbe et la ligne de base à gauche de la marque verticale. Ils correspondent au pourcentage de phase $\beta$ créée lors de la cristallisation. Le taux de la phase béta-nucléée vaut : % bêta du PP = 100% * [l'aire du pic bêta / (l'aire du pic alpha + l'aire pic bêta)]

A la figure 1, du polypropylène (film primaire) a été chauffé à la vitesse de 10°C/mn jusqu'à dépasser son point de fusion.

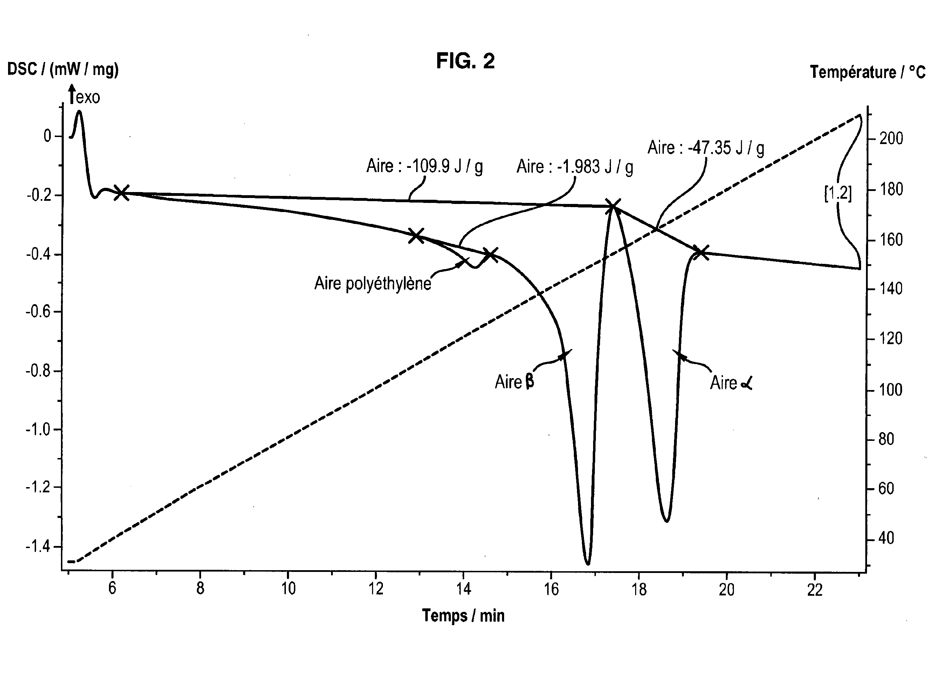

Dans le cas d'un mélange de polyoléfine (PP + PE) à la figure 2 suivant l'invention, la détermination se fait selon la même méthode qu'à la figure 1, en intégrant le pic supplémentaire attribuable aisément au PE (figure 2).

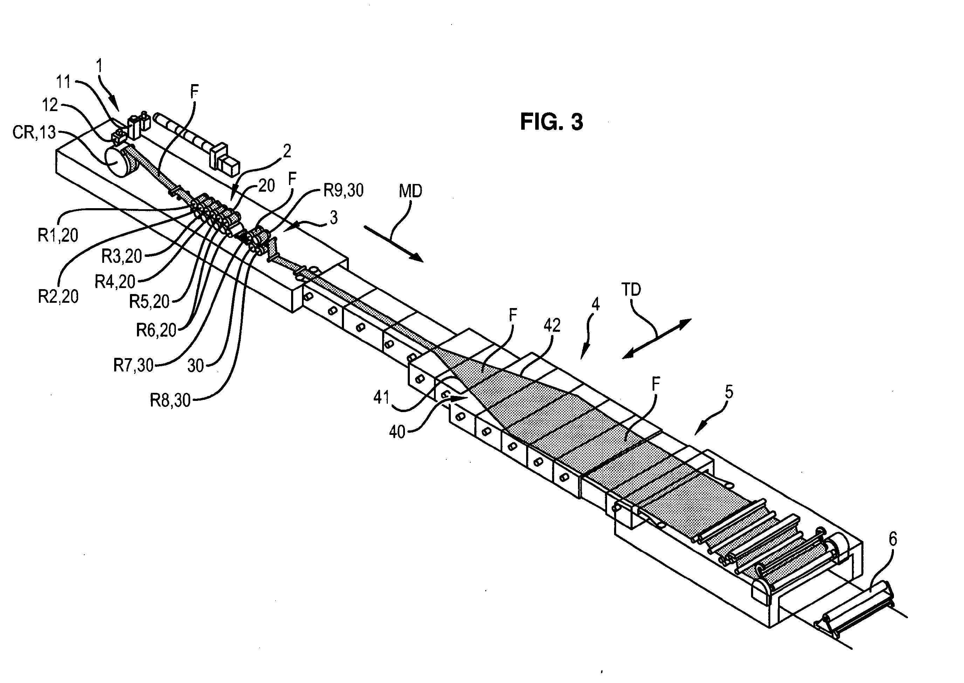

On décrit ci-dessous le procédé de fabrication suivant l'invention du film, en référence à la figure 3.

La fabrication du film F suivant l'invention passe successivement par une première zone de coulée 1, une deuxième zone 2 d'entrée d'étirage longitudinal, une troisième zone 3 de sortie d'étirage longitudinal, une quatrième zone 4 d'étirage transversal.

Dans la première zone de coulée 1, le mélange de matières suivant l'invention est d'abord introduit dans une extrudeuse 11 pour arriver à l'état fondu par une filière 12 sur le rouleau refroidisseur 13 ou tambour 13 de coulée pour former le film primaire F.

Le film primaire F dans la zone 1 a les caractéristiques suivantes :

- Epaisseur : 275 ± 25 μm,
- Taux cristaux β en sortie film primaire (avant étirage long) : ≥ 60 %

(Mesure par DSC - Méthodes des aires indiquée ci-dessus), notamment ≥ 65 %, et en particulier ≥ 75 %.

Température du rouleau refroidisseur 13 (vitesse de refroidissement) :

Il s'avère que la cristallisation doit être la plus lente possible pour former la phase β. Le domaine de formation des cristaux β étant connu, c'est-à-dire compris entre 90 et 130 °C, les essais les plus pertinents sont obtenus dans cet intervalle de température. La température idéale de formation de la phase β était comprise entre 120 et 130 °C.

Vitesse de rotation du rouleau refroidisseur 13

La vitesse de rotation du rouleau refroidisseur 13 fait intervenir deux phénomènes bien distincts qui sont le temps de cristallisation et l'orientation de la matière en sortie de filière. En s'orientant, la matière s'agence sous sa forme α stable due à la contrainte appliquée. Si le rouleau refroidisseur 13 tourne vite par rapport au débit de matière sortant de la filière 12, celle-ci est ainsi orientée. La vitesse à laquelle la matière sort de la filière 12 peut cependant être modifiée en jouant sur la pression à l'intérieur de la filière 12, sans pour autant modifier le débit.

Suivant l'invention, la porosité est augmentée par le fait que le temps de contact de la matière fondue avec le tambour de coulée 13 est d'au moins 30 secondes.

Par exemple, dans les essais 1 à 29 ci-dessous, le temps de contact de la matière fondue avec le tambour de coulée 13 est de 40 secondes environ. Par exemple, dans le premier exemple de réalisation indiqué ci-dessus, la vitesse linéaire sur le tambour de coulée 13 est inférieure à 3 mètres par minutes et est par exemple de 2 mètres par minutes pour un temps de contact de 40 secondes.

Dans le deuxième exemple de réalisation indiqué ci-dessus, le temps de contact de la matière fondue avec le tambour de coulée 13 est supérieur ou égal à 85 secondes. Par exemple, dans les essais 30 à 44 et 101 à 110 ci-dessous, le temps de contact de la matière fondue avec le tambour de coulée 13 est de 110 secondes environ. Par exemple, dans le deuxième exemple de réalisation indiqué ci-dessus, la vitesse linéaire sur le tambour de coulée 13 est inférieure à 1 mètre par minute et est par exemple de 0.6 mètres par minutes pour un temps de contact de 115 secondes.

Un tel temps de contact suivant l'invention améliore la formation des pores dans le film. La porosité est également augmentée par la température du mélange en fusion: 235 à 260°C.

Les paramètres dans la zone 1 de coulée sont par exemple les suivants dans le premier exemple de réalisation indiqué ci-dessus:

- Température du mélange en fusion : 235 à 260°C,
- Temps de contact sur tambour 13 de coulée (CR) : 40 ± 10 secondes,
- Température du tambour 13 de coulée (CR) : 110 à 145°C,
- Placage et refroidissement par lame d'air ou pas.

Les paramètres dans la zone 1 de coulée sont par exemple les suivants dans le deuxième exemple de réalisation indiqué ci-dessus:

- Température du mélange en fusion : 235 à 260°C,
- Temps de contact sur tambour 13 de coulée (CR) : 110 ± 10 secondes,
- Température du tambour 13 de coulée (CR) : 110 à 145°C,
- Placage et refroidissement par lame d'air ou pas.

Dans la deuxième zone 2 d'entrée d'étirage longitudinal, le film primaire F issu du tambour de coulée 13 est entraîné entre des rouleaux 20 dans une direction longitudinale ou sens machine MD correspondant au sens d'avancée du film.

La température des rouleaux 20 d'entraînement dans la deuxième zone 2 d'entrée d'étirage longitudinal est par exemple de 80 à 100 °C dans le premier exemple de réalisation et dans les essais 1 à 29 et est par exemple de 50 à 90 °C dans le deuxième exemple de réalisation et dans les essais 30 à 44 et 101 à 110, au moins pour les premiers rouleaux 20, R1, R2, R3, R4, R5 dans le sens d'avancée MD du film, ces premiers rouleaux 20, R1, R2, R3, R4, R5 ayant par exemple tous la même température.

Cette température des premiers rouleaux 20, R1, R2, R3, R4, R5 améliore la formation des pores dans le film.

Le dernier rouleau 20, R6 dans le sens d'avancée MD du film a par exemple une température supérieure à celle des premiers rouleaux 20, R1, R2, R3, R4, R5, par exemple égale à 115 °C environ dans les essais 1 à 29 et égale à 100 °C environ dans les essais 30 à 44 et 101 à 110.

Dans la troisième zone 3 de sortie d'étirage longitudinal, le film F passe entre des rouleaux 30 d'étirage longitudinal dans le sens MD, par le fait que les rouleaux 30 d'étirage font avancer le film à une plus grande vitesse dans la zone 3 de sortie que dans la zone 2 d'entrée, par exemple en ayant une plus grande vitesse de rotation, ce qui étire le film F dans la direction longitudinale MD entre la deuxième zone 2 et la troisième zone 3. Le film passe successivement sur des rouleaux 30 successifs R7, R8, R9.

Les paramètres dans la troisième zone 3 de sortie d'étirage longitudinal sont les suivants :

- Rapport vitesse entre zone 2 et zone 3 :
  (Vitesse Zone 3 / Vitesse Zone 2) $\geq$ 5,5
- NIR $\geq$ 0.20, ou même 0.28, 0.29 ou 0.30.
  avec NIR = (Largeur film Zone 2 - Largeur film Zone 3) / Largeur film Zone 2,
- Température des cylindres 30 d'étirage longitudinal: 50°C à 150°C, et dans le premier exemple de réalisation (essais 1 à 29) de 100°C à 150°C, et, dans les deuxième et troisième exemples de réalisation (essais 30 à 44 et 101 à 110), de 50°C à 100°C.

Le paramètre NIR est le taux de réduction de la largeur par étirage longitudinal, la largeur étant dans la direction transversale TD à la direction longitudinale.

Cette diminution de largeur a pour effet d'orienter les microvides du film dans le sens de la longueur mais aussi de les tasser sur une largeur réduite pour ainsi permettre lors de l'étirage transversal TD d'étirer perpendiculairement ces micro - trous, c'est-à-dire de les élargir. Ce procédé permet donc d'augmenter la porosité, porosité qui est plus uniformément répartie dans le film. Pour atteindre des valeurs de porosité pertinentes pour les applications visées, ce taux de réduction doit être d'au moins 20 %, et peut notamment être d'au moins 28 %.

L'écart entre les rouleaux d'étirage long 20 et 30 est directement lié au taux NIR. En outre, une grande surface d'étirage (Etirage transversal TD x Etirage long MD) réduit la densité volumique du film.

Dans la quatrième zone 4 d'étirage transversal, le film F issu de la zone 3 subit un étirage dans la direction transversale TD perpendiculaire dans le plan du film à sa direction longitudinale MD, tout en continuant d'avancer dans cette même direction longitudinale MD. Pour ce faire, le film est saisi sur ses deux bords longitudinaux opposés 41, 42 dans la zone 4 par des pinces non représentées suivant une trajectoire 40 qui avance dans la direction longitudinale MD et qui écarte l'un de l'autre progressivement les bords 41, 42 du film dans la direction transversale TD. La température d'étirage transversal TD dans la zone 4 est de 120 à 170°C dans le premier exemple de réalisation (essais 1 à 29), de 130 à 152°C dans le deuxième exemple de réalisation (essais 30 à 44) et de 135 à 149°C dans le troisième exemple de réalisation (essais 101 à 110). Le taux d'étirage transversal TD dans la zone 4 d'étirage transversal est par exemple supérieur ou égal à 4 ou même 6.

Le film F subit ensuite dans une zone 5 une légère relaxation qui diminue légèrement la largeur transversale du film, qui pourra ensuite être par exemple bobiné sur un mandrin 6 pour de futures utilisations.

Sur un film F bi-étiré fabriqué avec la première composition C1 dans les conditions de fabrication indiquées ci-dessus pour les premiers essais 1 à 29, on a mesuré les caractéristiques suivantes, avec la précision de mesure indiquée entre les parenthèses:

- Facteur d'espace : 217 % ($\pm$ 12 %) ;
- Epaisseur micrométrique : 20 $\mu$m ($\pm$ 6$\mu$m),
- Masse volumique : 0,285 g/cm$^3$ ($\pm$ 0,025 g/cm$^3$),
- Porosité : 65 % ($\pm$10%),
- Porosité Gurley : 100 secondes pour 100cm$^3$ ($\pm$15 secondes pour 100cm$^3$).

Sur un autre film F bi-étiré fabriqué avec la deuxième composition C2 dans les conditions de fabrication indiquées ci-dessus pour les deuxième essais 30 à 44 (film 009P015), on a mesuré les caractéristiques suivantes :

- Facteur d'espace : 203 % ($\pm$11%) ;
- Epaisseur micrométrique : 20 $\mu$m ($\pm$2 $\mu$m) ;
- Masse volumique : 0,299 g/cm$^3$ ($\pm$ 0,01 g/cm$^3$) ;
- Porosité : 67 % ($\pm$1%);
- Porosité Gurley : 119 secondes pour 100cm$^3$ ($\pm$23).

Détermination de la porosité en pourcentage

La porosité en % est déterminée par masse volumique par la formule suivante :

$$porosité = 1 - \frac{X}{Y}$$

où Y est la masse volumique de l'homopolymère de polypropylène utilisé et X est la masse volumique du film. Pour avoir le pourcentage de porosité, on multiplie par 100. Par exemple, dans l'exemple mentionné ci-dessus, Y = 0.905g/cm$^3$ et la porosité globale du film est obtenue par la formule suivante :

$$porosité(\%) = (1 - \frac{X}{0.905}) \times 100$$

Les tableaux 1, 2, 3 et 4 ci-dessous indiquent 10 essais de films réalisés suivant l'invention, où T désigne la température. Les essais apparaissant dans ces tableaux sont les essais 1 à 10, réalisés dans les conditions présentées ci-dessus.

Tableau 1 :

|  | Vis extrudeuse | Filière | Rouleau refroidisseur CR | Rouleau refroidisseur CR |
|---|---|---|---|---|
| Essai | Température de fusion (°C) | Température (°C) | Température (°C) | Vitesse (mètre/minute) |
| Essai 1 | 235 | 240 | 125 | 2 |
| Essai 2 | 234 | 240 | 125 | 2 |
| Essai 3 | 234 | 240 | 125 | 2 |
| Essai 4 | 234 | 240 | 125 | 2 |
| Essai 5 | 234 | 240 | 125 | 2 |
| Essai 6 | 234 | 240 | 125 | 2 |
| Essai 7 | 244 | 255 | 125 | 2 |
| Essai 8 | 247 | 255 | 125 | 2 |
| Essai 9 | 247 | 255 | 125 | 2 |
| Essai 10 | 247 | 255 | 125 | 2 |

Tableau 2 :

| Etirage long MD | T R1 (°C) | T R6 (°C) | Taux étirage long MD | NIR | T R7 (°C) | T R8 (°C) | T R9 (°C) |
|---|---|---|---|---|---|---|---|
| Essai 1 | 100 | 115 | 5.3 |  | 120 | 140 | 140 |
| Essai 2 | 90 | 115 | 4.4 | 0.35 | 120 | 135 | 135 |
| Essai 3 | 90 | 115 | 6 | 0.32 | 120 | 135 | 140 |
| Essai 4 | 90 | 115 | 6 | 0.32 | 120 | 135 | 140 |

(suite)

| Etirage long MD | T R1 (°C) | T R6 (°C) | Taux étirage long MD | NIR | T R7 (°C) | T R8 (°C) | T R9 (°C) |
|---|---|---|---|---|---|---|---|
| Essai 5 | 90 | 115 | 6 | 0.32 | 120 | 135 | 140 |
| Essai 6 | 90 | 115 | 6 | 0.31 | 120 | 140 | 135 |
| Essai 7 | 90 | 115 | 6 | 0.31 | 115 | 140 | 125 |
| Essai 8 | 90 | 115 | 5.4 | 0.29 | 115 | 140 | 125 |
| Essai 9 | 90 | 115 | 5.9 | 0.28 | 115 | 140 | 125 |
| Essai 10 | 90 | 115 | 5.6 | 0.28 | 115 | 140 | 125 |

Tableau 3 :

| Etirage transversal TD | Température (°C) | Taux d'étirage transversal |
|---|---|---|
| Essai 1 | 145 | 6.5 |
| Essai 2 | 145 | 7.5 |
| Essai 3 | 145 | 7.5 |
| Essai 4 | 145 | 7.5 |
| Essai 5 | 145 | 7.5 |
| Essai 6 | 145 | 7.5 |
| Essai 7 | 145 | 7 |
| Essai 8 | 145 | 7.5 |
| Essai 9 | 145 | 7.5 |
| Essai 10 | 145 | 7.5 |

Tableau 4 :

| Film final | épaisseur micrométrique ($\mu$m) | Masse volumique (g/cm$^3$) | Proportion copolymère d'éthylène /homopolymère PP en poids | Proportion de phase $\beta$ en % |
|---|---|---|---|---|
| Essai 1 | 80.7 | 0.342 | 70 / 30 | 71.3 |
| Essai 2 | 37.0 | 0.378 | 70 / 30 | 71.0 |
| Essai 3 | 27.2 | 0.328 | 80 / 20 | 70.7 |
| Essai 4 | 29.9 | 0.321 | 65 / 35 | 70.7 |
| Essai 5 | 29.0 | 0.321 | 60 / 40 | 69.7 |
| Essai 6 | 19.4 | 0.408 | 70 / 30 | 61.8 |
| Essai 7 | 43.2 | 0.275 | 70 / 30 | 69.6 |
| Essai 8 | 27.81 | 0.299 | 65 / 25 | 77.0 |

(suite)

| Film final | épaisseur micrométrique (μm) | Masse volumique (g/cm³) | Proportion copolymère d'éthylène /homopolymère PP en poids | Proportion de phase β en % |
|---|---|---|---|---|
| Essai 9 | 24.80 | 0.291 | 98 / 2 | 77.8 |
| Essai 10 | 25.87 | 0.270 | 70 / 30 | 78.3 |

L'essai 6 est considéré comme ayant une porosité de pratiquement 55 % suivant l'invention selon la formule indiquée ci-dessus.

Dans d'autres essais 21, 22, 23, 25, 26 et 29, le procédé de fabrication du film suivant l'invention a été mis en oeuvre avec les paramètres suivants :

- température de fusion : 246 °C, sauf pour l'essai 29 à 250 °C,
- température de rouleau refroidisseur CR de 120 °C et vitesse de rouleau refroidisseur CR de 2 mètres par minute,
- températures des premiers rouleaux 20, R1, R2, R3, R4, R5 de 90 °C,
- température du dernier rouleau 20, R6 de 115 °C,
- le taux d'étirage longitudinal MD est de 5.1, sauf pour l'essai 29 à 5.2,
- TR7 = 115 °C, TR8 = 140 °C, TR9 = 125 °C,
- les conditions d'étirage transversal TD sont données dans les tableaux 5, 6 et 7 ci-dessous, où TZ1, TZ2, TZ3, TZ4, TZ5, TZ6 sont les températures dans six zones successives d'un tunnel d'étirage transversal ayant comme écartement des chaînes supportant les pinces tenant les bords du film respectivement les distances d'écartement DZ1, DZ2, DZ3, DZ4, DZ5, DZ6 exprimées en cm, où TD désigne le taux d'étirage transversal, Copol / homo PP désigne la Proportion copolymère d'éthylène /homopolymère PP en poids et où β désigne la proportion de phase β en % déterminée suivant la méthodes des aires indiquée ci-dessus.

Tableau 5 :

| Essai | TZ1 (°C) | TZ2 (°C) | TZ3 (°C) | TZ4 (°C) | TZ5 (°C) | TZ6 (°C) |
|---|---|---|---|---|---|---|
| 21 | 147 | 147 | 147 | 150 | 155 | 155 |
| 22 | 150 | 150 | 150 | 150 | 155 | 155 |
| 23 | 150 | 150 | 150 | 150 | 160 | 160 |
| 25 | 145 | 145 | 145 | 150 | 165 | 165 |
| 26 | 150 | 150 | 150 | 150 | 155 | 155 |
| 29 | 147 | 147 | 147 | 150 | 155 | 155 |

Tableau 6 :

| Essai | DZ1 | DZ2 | DZ3 | DZ4 | DZ5 | DZ6 | TD |
|---|---|---|---|---|---|---|---|
| 21 | 150 | 140 | 600 | 740 | 720 | 700 | 7.5 |
| 22 | 150 | 140 | 600 | 740 | 720 | 700 | 7.5 |
| 23 | 150 | 140 | 600 | 740 | 720 | 700 | 7.5 |
| 25 | 150 | 140 | 600 | 740 | 720 | 700 | 7.5 |
| 26 | 150 | 140 | 600 | 740 | 720 | 700 | 7.5 |
| 29 | 150 | 140 | 600 | 740 | 720 | 700 | 7.5 |

Tableau 7 :

| Essai | Epaisseur pesée WT ($\mu$m) | Epaisseur micrométrique MT ($\mu$m) | Facteur d'espace Fe (%) | Masse volumique (g/cm$^3$) | Copol / homo PP | $\beta$ (%) |
|---|---|---|---|---|---|---|
| 21 | 8.6 | 26.4 | 209 | 0.293 | 70/30 | 78.5 |
| 22 | 8.3 | 25.5 | 206.4 | 0.295 | 70/30 | 78.0 |
| 23 | 8.1 | 24.8 | 205.9 | 0.296 | 70/30 | 78.3 |
| 25 | 8.5 | 25.8 | 204.5 | 0.297 | 70/30 | 77.8 |
| 26 | 6.9 | 21 | 204 | 0.298 | 70/30 | 77.6 |
| 29 | 7.9 | 23.9 | 204.3 | 0.297 | 70/30 | 77.7 |

Dans la deuxième série d'essais 30 à 44 (tableau 8), le procédé de fabrication du film suivant l'invention a été mis en oeuvre avec les paramètres suivants :

- température de fusion : 244 °C à 248°C,
- température de rouleau refroidisseur CR de 125 °C et vitesse de rouleau refroidisseur CR de 0,6 mètres par minute,
- températures des premiers rouleaux 20, R1, R2, R3, R4, R5 comprise entre 50°C et 90 °C,
- température du dernier rouleau 20, R6 de 100 °C,
- le taux d'étirage longitudinal MD est de 5.7
- TR7= 100 °C, TR8 = 50°C, TR9 = 70°C,
- TZ1=147°C sauf pour l'essai 30 où TZ1 = 148°C,
- TZ2 = 150°C, sauf pour l'essai 33 où TZ2 = 151°C,
- TZ3 =151°C sauf pour les essais 30 et 31, où TZ3=150.5°C et pour l'essai 33 où TZ3 = 151.5°C,
- TZ4 =146°C sauf pour l'essai 32 où TZ4 = 147°C,
- TZ5 =140°C sauf pour les essais 33, 34 et 35, où TZ5 = 135°C,
- TZ6 =140°C sauf pour les essais 33 et 34, où TZ6 = 130°C,
- NIR = 0.28,
- proportion de phase (3 $\geq$ 70 %
- la porosité Gurley POR1 est exprimée en secondes pour 100 cm$^3$,
- la porosité Gurley après étuvage POR2 est mesurée en secondes pour 100 cm$^3$ après une étuve à 120°C pendant 20 minutes,
- le retrait transversal a été mesuré à 120 °C, le temps de chauffage à la température indiquée étant de 15 minutes à chaque fois.

Tableau 8 :

| Essai | MT ($\mu$m) | Fe (%) | Masse volumique (g/cm$^3$) | Copol / homoPP | Porosité Gurley POR1 | Retrait transversal (%) | Porosité Gurley après étuvage POR2 |
|---|---|---|---|---|---|---|---|
| 30 | 20.8 | 203.2 | 0,298 | 20/80 | 111 | 7.23 | 175 |
| 31 | 20.4 | 213.6 | 0,289 | 20/80 | 114 | 6.65 | 175 |
| 32 | 20.0 | 204.2 | 0,298 | 20/80 | 95 | 7.09 | 150 |
| 33 | 22.1 | 206.8 | 0,295 | 20/80 | 121 | 7.46 | 190 |
| 34 | 20.9 | 193.9 | 0,308 | 20/80 | 115 | 7 | 175 |
| 35 | 21.4 | 197.2 | 0,305 | 20/80 | 122 | 6.12 | 180 |
| 36 | 20.6 | 202.5 | 0,299 | 20/80 | 119 | 5.66 | 170 |
| 37 | 20.0 | 200.9 | 0,301 | 20/80 | 123 | 6.56 | 185 |
| 38 | 20.1 | 205.7 | 0,296 | 20/80 | 123 | 6.43 | 180 |

(suite)

| Essai | MT (μm) | Fe (%) | Masse volumique (g/cm³) | Copol / homoPP | Porosité Gurley POR1 | Retrait transversal (%) | Porosité Gurley après étuvage POR2 |
|---|---|---|---|---|---|---|---|
| 39 | 19.2 | 202.2 | 0,300 | 20/80 | 116 | 5.07 | 165 |
| 40 | 19.9 | 205.9 | 0,296 | 20/80 | 125 | 5.82 | 175 |
| 41 | 20.6 | 203.6 | 0,298 | 20/80 | 122 | 6.25 | 180 |
| 42 | 20.6 | 203.5 | 0,298 | 20/80 | 121 | 5.63 | 170 |
| 43 | 20.0 | 202.9 | 0,299 | 20/80 | 119 | 6.97 | 175 |
| 44 | 20.5 | 196.3 | 0,305 | 20/80 | 122 | 6.48 | 180 |

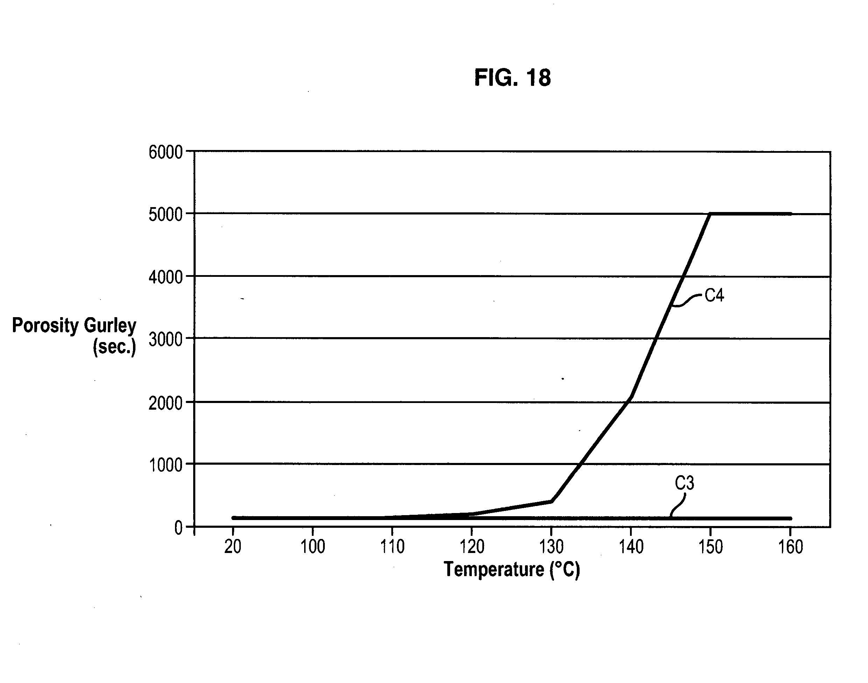

En outre, dans les essais 30 à 44, pour le film suivant le deuxième mode de réalisation de l'invention, d'épaisseur micrométrique inférieure ou égale à 20 μm (ou 21 μm) ou d'épaisseur micrométrique 20 μm ± 1 μm présente une porosité Gurley supérieure ou égale à 5000 secondes à 150 °C, ainsi que cela est représenté à la figure 18, où la courbe C3 représente la valeur de la porosité Gurley POR1 en secondes et où la courbe C4 représente la valeur de cette porosité Gurley mesurée en secondes en fonction de la température. On voit que jusqu'à environ 110°C, la porosité Gurley C4 réelle en secondes du film est égale à la valeur POR1 et est donc minimale en secondes, ce qui représente un film très poreux. Plus la température croît à partir de 110 °C, plus la valeur en secondes de la porosité Gurley mesurée C4 augmente, ce qui représente un film de moins en moins poreux au fur et à mesure que la température croît. A partir 150°C, la mesure C4 de la porosité Gurley présente un plateau égal à 5000 secondes, du fait que l'appareil de mesure présente une plage de mesure allant de 0 secondes à 5000 secondes. Par conséquent, pour une température supérieure ou égale à 150°C, la porosité Gurley est supérieure ou égale à 5000 secondes. Pour cette porosité Gurley supérieure à 5000 secondes à partir de 150 °C, les pores du film sont pratiquement fermés, ce qui est un comportement avantageux d'auto-protection dans les applications visées. En effet, lorsque le film est utilisé dans un dispositif de stockage d'énergie, cette fermeture des pores à 150°C et au-dessus de 150°C permet d'arrêter le dispositif de stockage d'énergie à partir de cette température, car le film n'agit plus comme séparateur et ne laisse plus passer les espèces électrochimiques à travers lui. Cela protège à ces hautes températures le dispositif de stockage d'énergie dans lequel se trouve le film et évite une détérioration du dispositif de stockage d'énergie. En revanche, jusqu'à 110 °C, le film agit comme séparateur en laissant passer les espèces électrochimiques et en ayant la valeur de porosité Gurley POR1, qui est sa valeur nominale de fonctionnement comme film de séparateur de dispositif de stockage d'énergie et ce qui permet donc le fonctionnement du dispositif de stockage d'énergie.

Dans une troisième série d'essais 101 à 110 (tableau 9), le procédé de fabrication du film suivant l'invention a été mis en oeuvre avec les paramètres suivants :

- composition du mélange identique à celle correspondant aux essais 30 à 44,
- temps de contact sur tambour refroidisseur de coulée 13 (en anglais : « Chill Roll ») refroidi à 125°C : environ 88 secondes (Vitesse = 0.8 m/sec),
- température de fusion : 239 °C à 257°C.
- température de rouleau refroidisseur CR de 125 °C et vitesse de rouleau refroidisseur CR de 0.7 à 0.8 mètres par minute,
- températures des premiers rouleaux 20, R1, R2, R3, R4, R5 comprise entre 50°C et 90 °C,
- température du dernier rouleau 20, R6 de 100 °C,
- le taux d'étirage longitudinal MD est de 5.7 à 5.
- TR7=100°C, TR8=50°C, TR9=70°C,
- TZ1 =145°C sauf pour l'essai 110 où TZ1 = 143°C,
- TZ2 = 148°C, sauf pour l'essai 101 où TZ2 = 147°C et pour l'essai 110 où TZ2 = 146°C,
- TZ3 =149°C sauf pour l'essai 101, où TZ3=148.5°C et pour l'essai 110 où TZ3 = 147°C,
- TZ4 =146°C sauf pour l'essai 101 où TZ4 = 148°C,
- TZ5 =140°C,
- TZ6 =135°C,
- Taux d'étirage transversal de 4,
- NIR = 0.28,
- proportion de phase β ≥ 70 %
- la porosité Gurley POR1 est exprimée en secondes pour 100 cm³,

- la porosité Gurley après étuvage POR2 est mesurée en secondes pour 100 cm$^3$ après une étuve à 120°C pendant 20 minutes,
- le retrait transversal dans le tableau ci-dessous a été mesuré à 120 °C.

On a alors mesuré les caractéristiques suivantes :

- la masse surfacique dans les 2 directions est ≤ 0.400 gr/cm$^2$,
- la mesure de porosité Gurley est < 180 sec et > à 100 sec,
- la porosité en pourcentage est > 55%,
- le film a un module d'élasticité longitudinal ≥ 1000 MPa (ASTM D 882),
- le film a un module d'élasticité transversal ≥ 300 MPa (ASTM D 882),
- le retrait longitudinal du film d'épaisseur micrométrique inférieure ou égale à 16 $\mu$m ou 17 $\mu$m (ou d'épaisseur micrométrique de 15 $\mu$m ± 1 $\mu$m) après 15 minutes à 120°C est inférieur à 3%,
- le retrait transversal du film d'épaisseur micrométrique inférieure ou égale à 16 $\mu$m ou 17 $\mu$m (ou d'épaisseur micrométrique de 15 $\mu$m ± 1 $\mu$m) après 15 minutes à 120°C est inférieur à 7%,
- le facteur d'espace est supérieur ou égal à 145 %.

Tableau 9 :

| Essai | MT ($\mu$m) | Fe (%) | Masse volumique (g/cm$^3$) | Copol / homoPP | Porosité Gurley POR1 | Retrait transversal (%) | Porosité Gurley après étuvage POR2 |
|---|---|---|---|---|---|---|---|
| 101 | 16.1 | 190.4 | 0.312 | 20/80 | 150 | 3.96 | 230 |
| 102 | 15.1 | 170.7 | 0.334 | 20/80 | 144 | 4.62 | 225 |
| 103 | 16.0 | 164.1 | 0.343 | 20/80 | 162 | 4.8 | 220 |
| 104 | 15.7 | 153.9 | 0.356 | 20/80 | 164 | 4.45 | 255 |
| 105 | 14.1 | 163.7 | 0.336 | 20/80 | 158 | 4.38 | 230 |
| 106 | 14.6 | 164.1 | 0.343 | 20/80 | 171 | 4.05 | 240 |
| 107 | 14.2 | 164.9 | 0.342 | 20/80 | 148 | 4.34 | 220 |
| 108 | 14.1 | 162.5 | 0.345 | 20/80 | 158 | 3.6 | 235 |
| 109 | 16.3 | 150.5 | 0.361 | 20/80 | 144 | 4.51 | 205 |
| 110 | 15.1 | 149.1 | 0.363 | 20/80 | 172 | 4.95 | 300 |

D'une manière générale, le film suivant l'invention présente également de grands modules de Young dans le sens longitudinal MD et dans le sens transversal TD (modules d'élasticité) selon la norme ASTM D882. Le module d'élasticité longitudinal est supérieur ou égal à 600 MPa, voire supérieur ou égal à 700 MPa, en ayant par exemple une valeur de 730 MPa sur un exemple de film poreux réalisé suivant l'invention. Le module d'élasticité transversal est supérieur ou égal à 300 MPa, voire supérieur ou égal à 400 MPa, en ayant par exemple une valeur de 445 MPa sur un exemple de film poreux réalisé suivant l'invention.

Le film suivant l'invention a également une tension de claquage supérieure ou égale à 330 V /$\mu$m (épaisseur micrométrique).

Le film suivant l'invention présente également un retrait faible dans le sens longitudinal et dans le sens transversal.

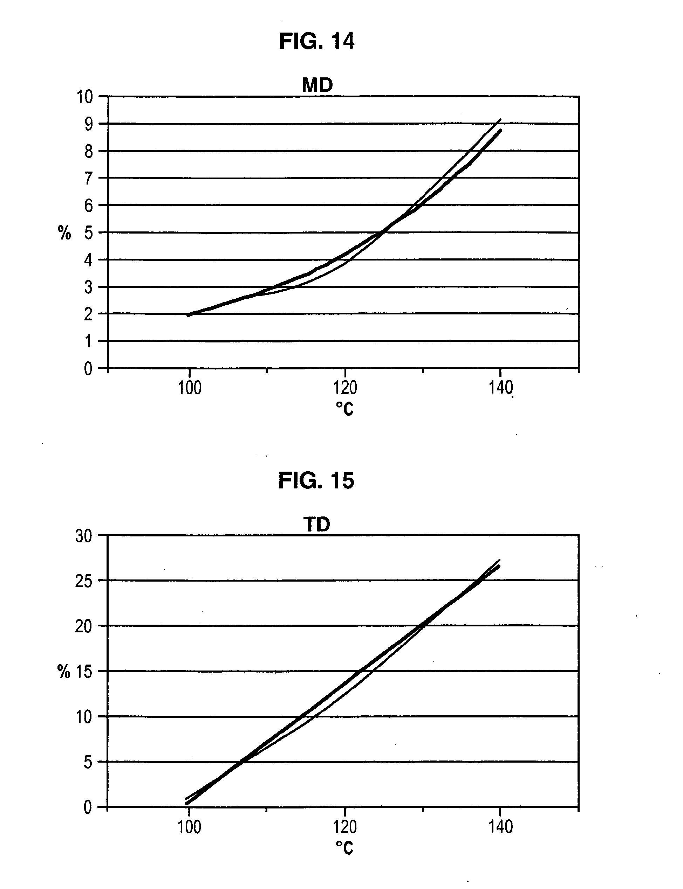

Les figures 14 et 15 indiquent les retraits pour un film suivant l'invention d'une épaisseur micrométrique de 25 $\mu$m ± 2 $\mu$m. D'une manière générale, les valeurs de retrait sont indiquées pour un temps de chauffage de 15 minutes à la température mentionnée.

A la figure 14, le retrait dans la direction longitudinale MD est inférieur ou égal à 4 % à 120 °C et est inférieur ou égal à 9 % à 140 °C pour un film poreux suivant l'invention.

A la figure 15, le retrait dans la direction transversale TD est inférieur ou égal à 13 % à 120 °C et est inférieur ou égal à 27 % à 140 °C pour le film poreux suivant l'invention.

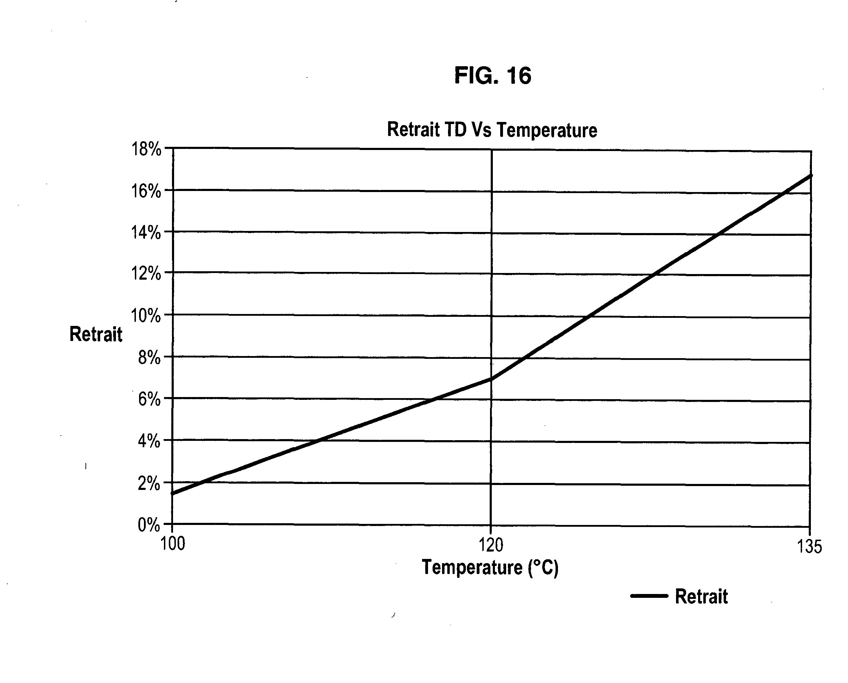

On voit à la figure 16 que, dans les essais 34 à 35, le retrait transversal à 120°C du film d'épaisseur micrométrique inférieure ou égale à 20 $\mu$m (ou 21 $\mu$m) ou d'épaisseur micrométrique 20 $\mu$m ± $\mu$m est inférieur à 8%. Dans ces essais 34 à 35, le retrait transversal à 135°C du film d'épaisseur micrométrique inférieure ou égale à 20 $\mu$m (ou 21 $\mu$m) ou d'épaisseur micrométrique 20$\mu$m $\pm$ $\mu$m est inférieur à 18%.

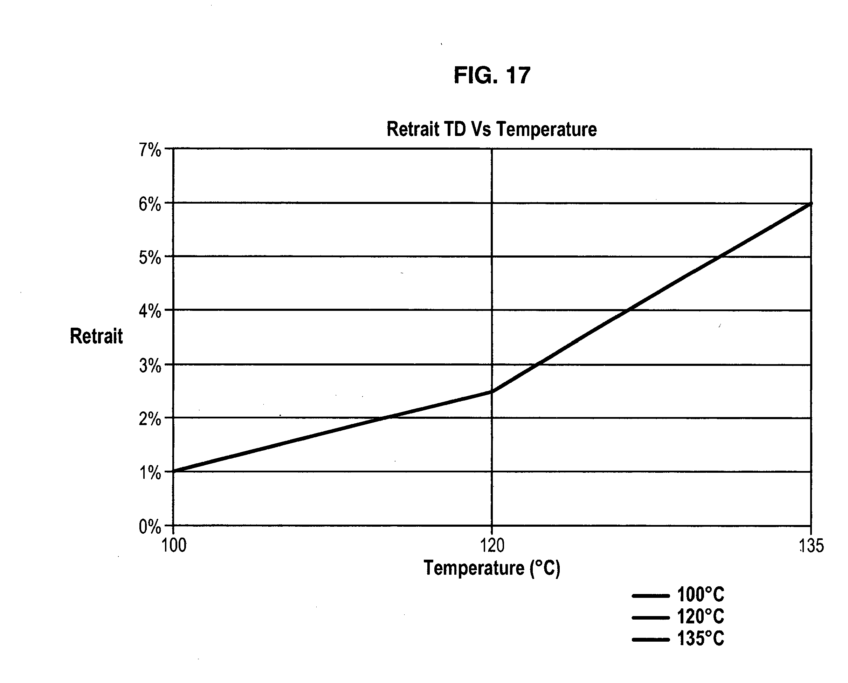

On voit à la figure 17 que, dans les essais 34 à 35, le retrait longitudinal à 120°C du film d'épaisseur micrométrique inférieure ou égale à 20 $\mu$m (ou 21 $\mu$m) ou d'épaisseur micrométrique 20 $\mu$m $\pm$ $\mu$m est inférieur à 3 %. Dans ces essais 34 à 35, le retrait longitudinal à 135°C du film d'épaisseur micrométrique inférieure ou égale à 20 $\mu$m (ou 21 $\mu$m) ou d'épaisseur micrométrique 20 $\mu$m $\pm$ 1$\mu$m est inférieur à 7%.

Ces caractéristiques rendent le film adapté à la réalisation d'éléments de stockage d'énergie électrique, notamment du fait de la stabilité thermique du film poreux et de son retrait limité.

En outre, le film est moins sujet à la rupture en cours de fabrication, du fait de sa stabilité mécanique.

On décrit ci-dessous des réalisations du film pour différentes applications de stockage d'énergie.

<u>Supercondensateurs</u>

Le film suivant l'invention forme par exemple le séparateur d'un supercondensateur, ce séparateur formant avec l'électrolyte le diélectrique du condensateur. Pour éviter les problèmes inhérents au séparateur en cellulose, la solution est de recourir à un séparateur dont les performances associent à la fois l'inertie électrochimique et chimique vis-à-vis des électrolytes organiques standards (acétonitrile avec un sel de type TEABF$_4$, carbonate de propylène avec un sel de TEMABF$_4$) ou aqueux (KOH dans l'eau ou acide sulfurique en forte concentration). Dans le même temps, le séparateur doit être bobinable sans se déformer, doit être d'un coût relativement faible, doit être poreux (porosité supérieure à 55%, mieux si supérieure à 70%) avec une valeur de perméabilité Gurley inférieure à 150. Enfin, le séparateur doit être imprégnable facilement, ce qui est le cas des séparateurs en cellulose mais plus rarement le cas pour les séparateurs en polymère, qui sont anisotropes.

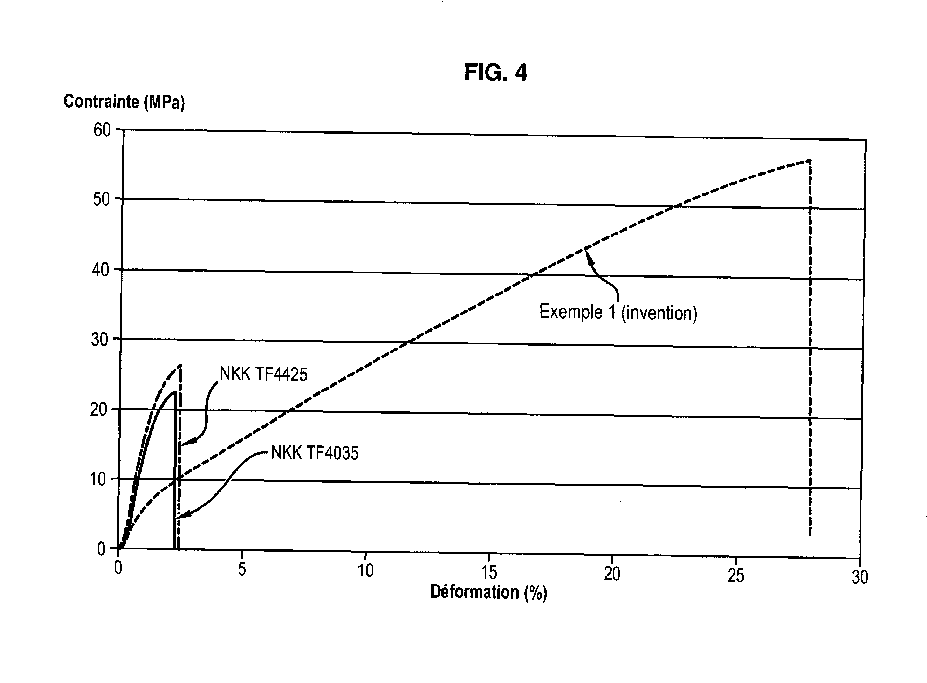

Le séparateur réalisé à partir du film de l'invention selon l'exemple 1 présente des caractéristiques mécaniques bien supérieures à celles obtenues pour le séparateur en cellulose des exemples comparatifs 1 et 2, notamment ce qui concerne la résistance à la contrainte à la rupture (figure 4 et tableau 10), qui est plus grande que 50 Mpa pour le film poreux suivant l'invention . Le test présenté suit la norme ISO 1924/2-1985, ASTM D882.

Tableau 10 :

| | Nom | Epaisseur micromét rique | Densité | Porosité (%) | Durée de vie (floating 2.8V/70°C) en heures | Contrainte à la rupture (MPa) |
|---|---|---|---|---|---|---|
| Exemple 1 | Exemple suivant l'invention | 25$\mu$m | 0.27 | 70% | 900h | 57 |
| Exemple comparatif 1 | NKK TF4035 | 35$\mu$m | 0.40 | 75% | 750h | 22.5 |
| Exemple comparatif 2 | NKK TF4425 | 25$\mu$m | 0.44 | 72% | 750h | 26 |

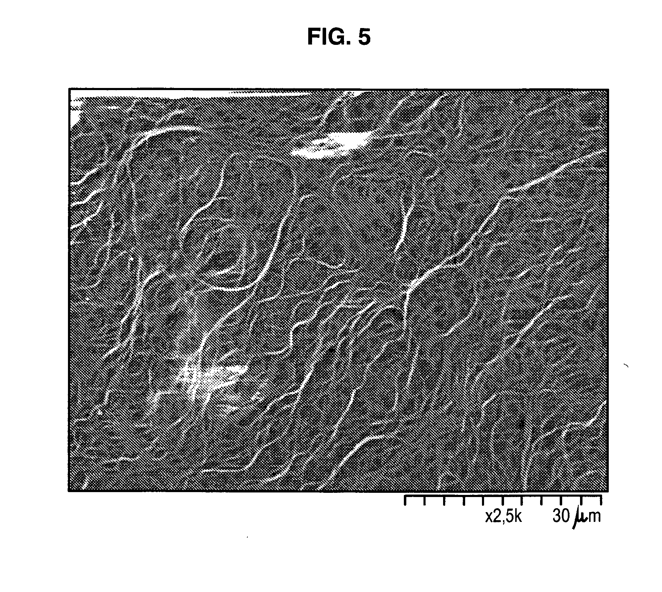

Comme le montrent les résultats, le séparateur de l'exemple 1 est particulièrement résistant d'un point de vue mécanique, bien qu'il soit plus léger que le séparateur en cellulose. Cela est dû à sa structure tridimensionnelle continue: les chaines de polymères sont accrochées chimiquement les unes aux autres (figure 5, exemple d'un film de densité 0.319). Comme le montre la figure 5 (image MEB), la structure peut être assimilée à un « tas de nouilles » entrelacées et reliées les unes aux autres. Cette structure particulière confère au film ainsi réalisé une porosité particulièrement élevée et une tortuosité suffisamment élevée pour éviter tout problème de court-circuit entre les deux électrodes positionnées de part et d'autre du séparateur. Dans le cas de la cellulose, le séparateur est réalisé à partir de fibres calandrées les unes sur les autres : le risque de déformation est donc plus élevé, ce qui peut potentiellement générer des problèmes de courts-circuits entre électrodes, en raison de la fragilité du film.

Les performances électrochimiques du séparateur suivant l'invention (exemple 1, correspondant à l'essai 10) sont également supérieures à celles obtenues avec le film à base de cellulose (tableau 10) en durée de vie (+20%). Les tests ont été réalisés à partir de supercondensateurs Batscap 650F en floating à 70°C et à une tension unitaire de 2.8V.

Piles et batteries fonctionnant en milieu organique liquide ou gel

Le film suivant l'invention peut être utilisé pour former le séparateur de telles piles ou batteries.

Des tests ont été réalisés à partir du film en vue de son application pour les batteries fonctionnant en milieu organique. L'exemple décrit ici concerne les batteries Lithium-ion (Li-ion), dont les caractéristiques requises sont les plus contraignantes tant d'un point de vue électrochimique que chimique.

Dans le cas des batteries Li-ion, l'électrolyte utilisé est du $LiPF_6$ 1M dans un mélange de EC/DEC/DMC 1 :1 :1.

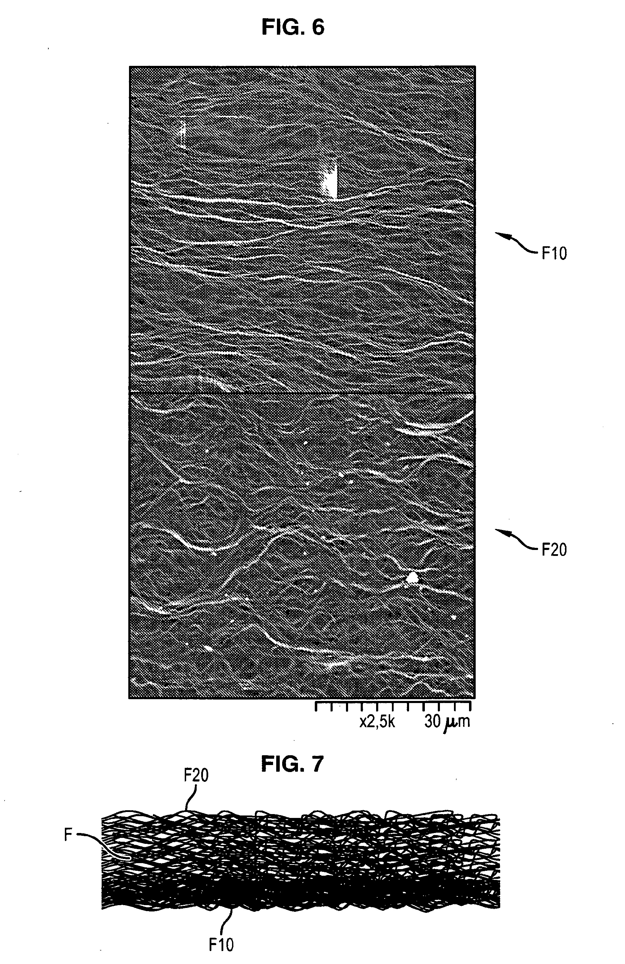

Pour permettre d'améliorer la sécurité de ces batteries pouvant présenter des risques de court-circuit entrainant une dégradation irréversible du composant (inflammation du composant). Le film réalisé dans cette invention peut être rendu dissymétrique lors de sa fabrication entre ses deux faces. Par exemple, on applique une température différente sur la première face F10 du film F en contact avec le rouleau refroidisseur CR et sur la deuxième autre face F20 opposée du film F. Par exemple, on applique une lame d'air plus froid que le rouleau refroidisseur CR sur la deuxième autre face F20 opposée du film. On, obtient ainsi une rugosité de la première face F10, plus grande que la rugosité de la deuxième face F20. La rugosité de la première face F10 est par exemple supérieure ou égale à une fois et demie la rugosité de la deuxième face F20. La première face F10 du côté rouleau refroidisseur CR a moins de porosité que l'autre deuxième face F20. Cela permet d'améliorer les performances en vieillissement et de sécurisation du composant. Il est important de noter qu'en cas de surchauffe du composant (T>160°C), le film devient transparent et perd sa porosité (la porosité se referme) lors de la montée en température, ce qui entraine l'isolement électriquement et électrochimiquement les deux électrodes. Cela réduit ainsi le risque de feu du composant. Un exemple de film dissymétrique (obtenu par températures différentes sur le rouleau refroidisseur CR et une lame d'air chaud pour plaquer le film sur ce même rouleau refroidisseur CR) est donné en figure 6 représentant en haut dans le cadre une vue agrandie de la face F1 du côté du rouleau refroidisseur CR et en bas une vue agrandie de la face F20 du côté de la lame d'air. Le principe est schématisé en figure 7 sur une épaisseur en profil.

Ce film dissymétrique permet d'éviter la formation de dendrites que l'on peut retrouver dans les batteries lithium (ion ou métal polymère) et ainsi éviter tout risque de court-circuit par ce mode de défaillance engendrant un risque de feu du composant.

En cas d'autopsie du composant ayant subi une élévation trop importante de température, le film peut ainsi constituer une preuve irréfutable de traceur vis-à-vis de l'histoire thermique du composant (identification du mode de défaillance).

Le film utilisable dans ce type de batterie doit être fin (inférieur à $25\mu m$, mieux si inférieur à $15\mu m$) et être assez poreux pour permettre aux ions lithium de passer entre les deux électrodes. La porosité de ce film doit être au moins supérieure à 30% mais être mécaniquement résistant. L'invention permet la réalisation d'un film avec une porosité supérieure à 50% tout en étant mécaniquement très résistant (la valeur de résistance à la perforation, en anglais « puncture strength » réalisée par test ASTM D3420 est multipliée au moins par 2 par rapport à un film réalisé par monoétirage à froid, à épaisseur identique). L'essai 6 démontre ces propriétés (porosité de 55% avec épaisseur micrométrique de $19.4\mu m$).

Les polyoléfines étant hydrophobes, la quantité résiduelle d'eau au sein du séparateur est très faible (quelques dizaines de ppm). En outre, le film ne contenant pas de charge minérale, il n'a pas d'impact négatif sur le vieillissement. Ces propriétés permettent industriellement de ne pas avoir besoin de dégazer le composant à une température élevée (typiquement supérieure à 110°C) pour évacuer l'eau (gain de temps et réduction du coût).

Piles et batteries fonctionnant en milieu aqueux liquide ou gel

Le film suivant l'invention peut être utilisé pour former le séparateur de telles piles ou batteries.

Dans l'état de la technique, les séparateurs utilisés dans les systèmes de stockage d'énergie fonctionnant en milieu aqueux sont généralement à base de fibres de verres. Dans le cas des batteries plomb acide, ces séparateurs sont onéreux, relativement épais (supérieure à $40\mu m$) et fragiles mécaniquement (ce qui explique l'épaisseur micrométrique nécessaire pour être manipulable), mais présentent l'avantage d'être très poreux (supérieur à 70%). En outre, l'épaisseur micrométrique requise est généralement utilisée pour contenir l'électrolyte utilisé dans le système de stockage d'énergie.

Le film réalisé suivant l'invention (essai 1) présente l'avantage de pouvoir être à la fois épais pour pouvoir contenir l'électrolyte et en même temps être très poreux (62% pour l'essai 1). Le film réalisé est mécaniquement très résistant comme nous avons pu le voir dans les exemples précédent, et présente des caractéristiques de tenues chimiques (inerte pour les acides forts tels que l'acide sulfurique ou les bases fortes, telles que la potasse ou la soude) et électrochimiques (tension supérieure à 5V sans dégradation du film).

Le film est donc avantageusement utilisable dans les batteries Plomb-acide ou Nickel-métal Hydrure (Ni-MH).

Condensateurs électrolytiques

Le film suivant l'invention peut être utilisé pour former le séparateur de tels condensateurs électrolytiques. Le film suivant l'invention peut être métallisé.

Le film réalisé dans l'invention peut aisément être substitué au séparateur standard en cellulose utilisé dans cette technologie.

La tension de claquage du film décrit dans l'invention est de l'ordre de 3500V (film de l'essai 9). De ce fait, un film fin de $25\mu$m est suffisamment performant pour se substituer avantageusement à trois épaisseurs de séparateurs en cellulose de $25\mu$m chacun (gain en volume et en masse).

D'un point de vue technologique, le métal, par exemple de l'aluminium, utilisé pour réaliser la collection de courant (cathode) est gravé électrochimiquement pour augmenter la surface de contact avec l'électrolyte. Une solution permettant d'éviter l'utilisation de cette feuille d'aluminium est de réaliser un dépôt sous vide d'aluminium directement sur le séparateur formé du film suivant l'invention. Cela est difficilement réalisable sur un séparateur en cellulose en raison de la mauvaise tenue mécanique entre les fibres de cellulose et le métal déposé.

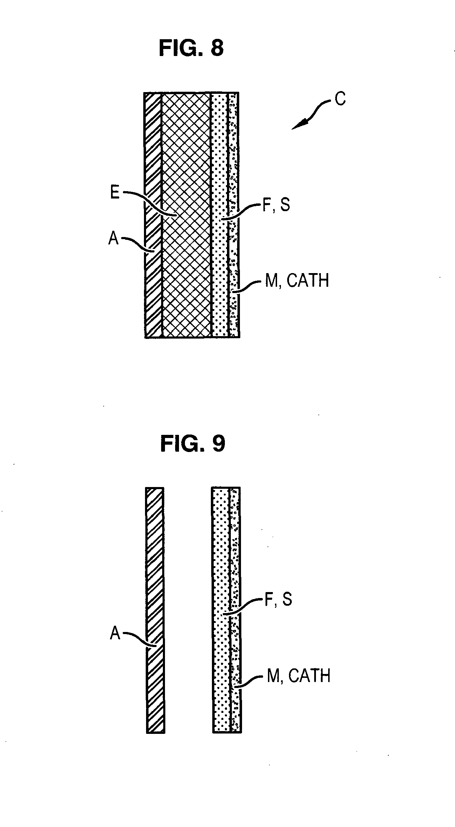

Les figures 8 et 9 montrent schématiquement la succession des couches d'un condensateur électrolytique C, comportant successivement une anode métallique A, formée par exemple d'un film en aluminium, contenant un dépôt en alumine, un électrolyte E, un séparateur S formé du film poreux F suivant l'invention, et une cathode CATH.

Le film poreux F décrit dans la présente invention peut être recouvert sur une face par un métal M déposé formant la cathode CATH, ce métal M étant par exemple déposé sous vide, tel que par exemple de l'aluminium.

Le métal M utilisé peut être de l'aluminium, du zinc, de l'argent ou tout autre métal utilisable dans la technologie de condensateur électrolytique.

La figure 9 représente la configuration en bobinage de l'anode A, du film F, S et de la cathode CATH, M. Après le bobinage, le tout est imprégné de l'électrolyte E, qui pénétrera entre la cathode A et le séparateur S, F.

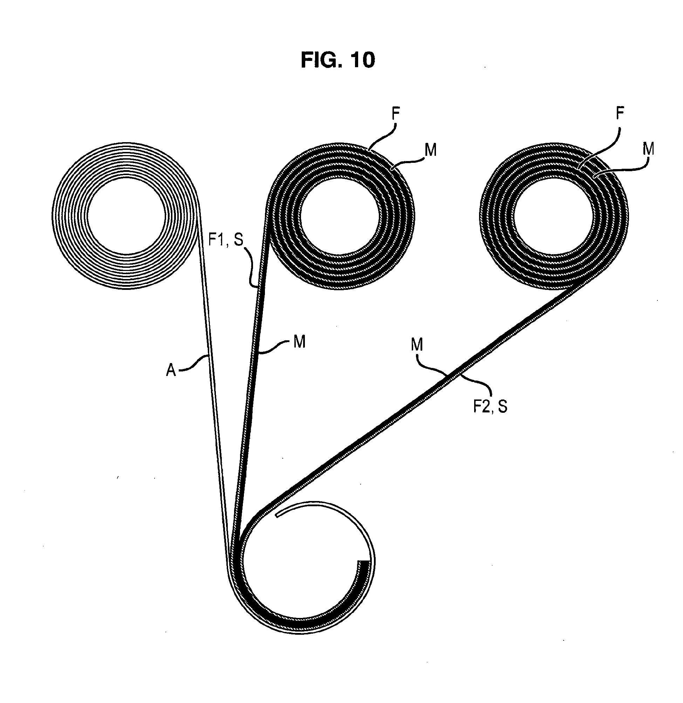

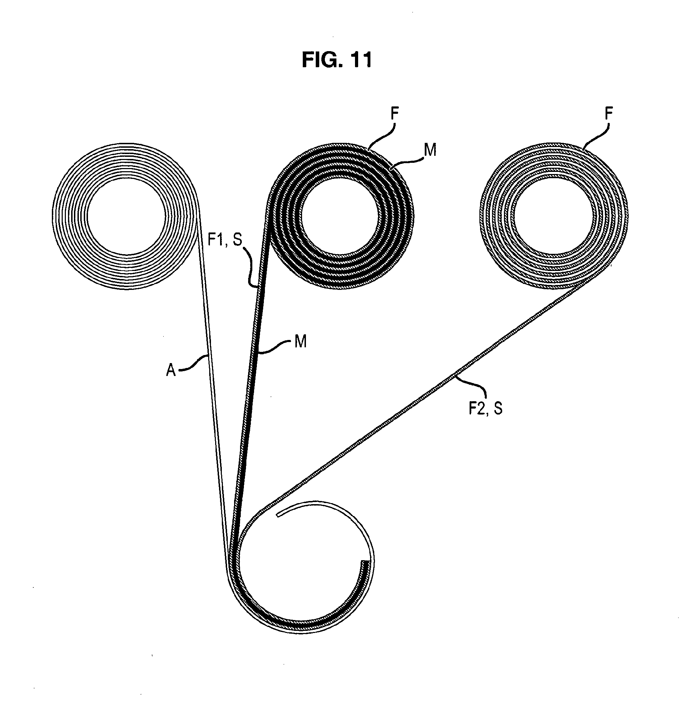

Deux modes de réalisation d'un composant bobiné C de condensateur électrolytique sont décrits dans les figures 10 et 11.

Dans le mode de réalisation de la figure 10, le bobinage associe un film d'anode A standard et deux premier et deuxième films F1, F2 suivant l'invention contenant chacun sur une face un dépôt métallique M, par exemple d'aluminium. Lorsque le composant C est bobiné, les surfaces M de dépôt sont en regard l'une de l'autre et sont prises en sandwich entre les films F1, F2 de polymère poreux. Le film d'anode A se retrouve pris en sandwich entre les deux films F1, F2 formant le séparateur S, l'anode A se trouvant contre la face non métallisée de chacun des deux films F1, F2.

L'intérêt est d'utiliser deux films F1, F2 identiques ayant un dépôt sur une face mis en vis-à-vis est d'accroitre la surface de collection de courant.

Il faut noter que, le film polymère étant poreux, cela confère au dépôt métallique M une très grande surface de contact avec l'électrolyte E (au moins aussi importante que pour un film standard). Effectivement, la rugosité du film polymère est particulièrement importante.

Dans le mode de réalisation de la figure 11, on utilise au cours du bobinage successivement un film A d'anode standard, une bobine d'un premier film poreux F1 suivant l'invention contenant sur une face un dépôt métallique M, par exemple d'aluminium, et une autre deuxième bobine de film F2 polymère poreux suivant l'invention sans dépôt métallique. Une seule bobine F1 métallisée est utilisée. Le film d'anode A se trouve d'un côté contre la face non métallisée du premier film F1 et de l'autre côté contre le deuxième film F2 non métallisé. Cela permet d'obtenir des caractéristiques proches de la proposition 1 mais à un moindre prix (le film sans dépôt est moins onéreux que le film avec dépôt).

Dans ce mode de réalisation, la bobine de film sans dépôt peut également être en cellulose.

Dans les modes de réalisation des figures 10 et 11, les bobines de films F1, F2 autres que l'anode A peuvent être multiples (empilement de plusieurs couches successives d'isolant).

A la figure 12, les flèches épaisses indiquent le côté par lequel, dans la configuration proposée, les reprises de courant peuvent être effectuées à partir du film poreux métallisé de la figure 11. Ces reprises de courant ou bornes peuvent être réalisées par choupage, par exemple. Ces reprises de courant sont situées sur des bords éloignés l'un de l'autre.

Dans le cas de l'anode A, la jonction entre les différents films en aluminium peut être réalisée selon des méthodes traditionnelles telles que décrites dans de nombreux brevets.

Pour la cathode CATH, de l'aluminium peut être projeté en surface du côté 100. Cela permet ensuite d'ajouter un fil de reprise. Cette technique est déjà utilisée dans les gros condensateurs diélectriques et est déjà largement répandue.

Une autre solution également largement utilisée consiste à souder directement sur le film (anode ou cathode) un fil. Cela est possible dans le cas du film poreux avec dépôt d'aluminium (on peut également ajouter une projection supplémentaire de matière comme cela est décrit pour le dépôt sur tranche, précédemment). Pour ce film de cathode, le dépôt peut de faire sur la dernière spire extérieure, alors que le fil de reprise de l'anode peut se faire au centre.

Cette méthode très usitée permet de positionner les 2 bornes du même côté, ce que ne permet pas la proposition de la figure 12.

A la suite du bobinage, le composant est imprégné par un électrolyte.

L'électrolyte est généralement de l'acide borique ou du borate de sodium en solution aqueuse avec différents sucres ou d'éthylène glycol qui sont ajoutés pour retarder l'évaporation.

Il existe trois grands types d'électrolytes à base d'eau pour les condensateurs électrolytiques en aluminium: l'eau standard basé sur (avec 40-70% d'eau), et celles contenant de l'éthylène glycol ou une cétone dipropyl (à la fois avec de l'eau inférieure à 25%). Il existe un certain nombre d'électrolytes non-aqueux, qui n'utilisent qu'une petite quantité d'eau. Les électrolytes sont généralement composés d'un acide faible, un sel d'acide faible, et un agent épaississant le solvant, avec possibilité de contenir différents additifs.

Les acides faibles sont généralement de nature organique (acide acétique, l'acide lactique, l'acide propionique, acide butyrique, l'acide crotonique, l'acide acrylique, phénol, crésol, etc) ou l'acide borique. Les sels utilisés sont souvent des ammoniums ou les sels métalliques d'acides organiques (acétate d'ammonium, le citrate d'ammonium, acétate d'aluminium, le lactate de calcium, d'oxalate d'ammonium, etc) ou les acides faibles inorganiques (perborate de sodium, phosphate trisodique, etc.).

L'avantage du séparateur en polymère poreux est d'être inerte chimiquement et électrochimiquement à l'ensemble des électrolytes décrits ci-dessus. De ce fait, l'emploi de ce type de séparateur est généralisable à l'ensemble des condensateurs électrolytiques liquides.

Le principe décrit dans cette enveloppe est généralisable également aux technologies de condensateurs électrolytiques solides (électrolyte solide) et au condensateur à électrolyte liquide au tantale.

Le métal utilisé peut être différent de l'aluminium.

Le dépôt de métal M sur le film F1, F2 peut se faire par évaporation, mais également par projection ou toute autre méthode adaptée pour réaliser un dépôt dont la pureté du matériau est contrôlée et dont la méthode ne fait pas fondre le polymère (la porosité du film doit être conservée du côté opposé au dépôt de métal).

Suivant un mode de réalisation, on choisit en plus le facteur d'espace Fe inférieur ou égal à 300 %.

## Revendications

**1.** Film de séparateur pour dispositif servant à emmagasiner de l'énergie électrique, le film étant poreux et orienté, le film étant obtenu par étirage dans une direction longitudinale et dans une direction transversale à la direction longitudinale, le film contenant un mélange comportant

un homopolymère de polypropylène,

au moins 10 % en poids d'au moins un copolymère de monomères comprenant au moins du propylène et de l'éthylène,

au moins un agent béta-nucléant constitué de gamma - quinacridone,

**caractérisé en ce que**

le copolymère a une proportion d'éthylène supérieure ou égale à 1 % et inférieure à 10 % en poids du copolymère et une proportion de propylène d'au moins 90 % en poids du copolymère pour une épaisseur micrométrique du film supérieure ou égale à 8 micromètres et inférieure ou égale à 30 micromètres correspondant à un facteur d'espace déterminé selon la norme IEC-60674-3-1 supérieur ou égal à 145 % et une masse volumique du film étiré dans les deux directions supérieure ou égale à 0.18 g/cm$^3$ et inférieure ou égale à 0.41 g/cm$^3$.

**2.** Film suivant la revendication 1, **caractérisé en ce que** l'épaisseur micrométrique du film est inférieure ou égale à 25 micromètres.

**3.** Film suivant la revendication 1, **caractérisé en ce que** l'épaisseur micrométrique du film est inférieure ou égale à 20 micromètres.

**4.** Film suivant la revendication 1, **caractérisé en ce que** l'agent béta-nucléant est constitué de gamma - quinacridone présente en une proportion supérieure ou égale à 0.11 % et inférieure ou égale à 0.5 % en poids.

**5.** Film suivant l'une quelconque des revendications précédentes, **caractérisé en ce que** le film étiré dans les deux directions a une porosité de type Gurley supérieure ou égale à 50 secondes et inférieure ou égale à 300 secondes pour 100 cm$^3$.

**6.** Film suivant l'une quelconque des revendications précédentes, **caractérisé en ce que** le film étiré dans les deux directions a une porosité en pourcentage supérieure ou égale à 50 %.

**7.** Film suivant l'une quelconque des revendications précédentes, **caractérisé en ce que** le film a un module d'élasticité longitudinal supérieur ou égal à 800 MPa selon la norme ASTM D882 et/ou un module d'élasticité transversal supérieur ou égal à 300 MPa selon la norme ASTM D882.

**8.** Film suivant l'une quelconque des revendications précédentes, **caractérisé en ce que** le mélange comporte en outre du stéarate de calcium en une proportion de 25 à 250mg/kg du mélange.

**9.** Film suivant l'une quelconque des revendications précédentes, **caractérisé en ce que** le retrait transversal du film d'épaisseur micrométrique inférieure ou égale à 20μm à 120°C est inférieur à 8%.

**10.** Film suivant l'une quelconque des revendications précédentes, **caractérisé en ce que** pour une température supérieure ou égale à 150°C, le film a une porosité Gurley supérieure ou égale à 5000 secondes.

**11.** Procédé de fabrication d'un film de séparateur pour dispositif servant à emmagasiner de l'énergie électrique suivant l'une quelconque des revendications 1 à 10, procédé dans lequel, au cours d'une première étape on fait passer ledit mélange à l'état fondu sur un tambour (CR, 13) refroidisseur de coulée, qui est mis en rotation et qui a une température inférieure à la température du mélange à l'état fondu pour obtenir un film primaire (F), on étire le film primaire (F) dans sa direction longitudinale (MD) d'avancée au cours d'une deuxième étape après la première étape, on étire le film (F) dans la direction (TD) transversale à la direction longitudinale (MD), le procédé étant **caractérisé en ce que** lors de la première étape, ledit mélange à l'état fondu a un temps de contact avec le tambour (CR, 13) refroidisseur de coulée supérieur ou égal à 30 secondes.

**12.** Supercondensateur électrique, comportant au moins deux conducteurs électriques reliés à au moins deux bornes d'utilisation, dans lequel au moins un film poreux de séparateur suivant l'une quelconque des revendications 1 à 10 et un électrolyte imprégnant le film se trouvent entre les deux conducteurs électriques.

**13.** Batterie de stockage d'énergie électrique, comportant au moins deux conducteurs électriques reliés à au moins deux bornes d'utilisation, dans lequel au moins un film poreux de séparateur suivant l'une quelconque des revendications 1 à 10 et un électrolyte imprégnant le film se trouvent entre les deux conducteurs électriques.

**14.** Condensateur électrolytique, comportant une anode (A) et une cathode (CATH), entre lesquels se trouvent au moins un film poreux de séparateur suivant l'une quelconque des revendications 1 à 10 et un électrolyte imprégnant le film.

**15.** Condensateur électrolytique suivant la revendication précédente, dans lequel la cathode est formée par un dépôt métallique (M) sur une seule face dudit au moins un film poreux.

**Patentansprüche**

**1.** Trennfolie für eine Vorrichtung zum Speichern von elektrischer Energie, wobei die Folie porös und orientiert ist, wobei die Folie durch Strecken in einer Längsrichtung und in einer Richtung quer zu der Längsrichtung hergestellt ist, und wobei die Folie ein Gemisch enthält, das Folgendes umfasst:

- ein Polyproplyen-Homopolymer,
- mindestens 10 Gew.-% mindestens eines Copolymers aus Monomeren, die mindestens Propylen und Ethylen umfassen,
- mindestens ein Beta-Nukleierungsmittel, das aus Gamma-Chinacridon besteht,

**dadurch gekennzeichnet, dass**
das Copolymer einen Anteil an Ethylen von größer oder gleich 1 Gew.-% und kleiner als 10 Gew.-% des Copolymers und einen Anteil an Propylen von mindestens 90 Gew.-% des Copolymers bei einer mikrometrischen Dicke der Folie von größer oder gleich 8 Mikrometern und kleiner oder gleich 30 Mikrometern hat, was einem Raumfaktor, bestimmt nach der Norm IEC-60674-3-1, von größer oder gleich 145% entspricht, und einer Volumenmasse der in den zwei Richtungen gestreckten Folie von größer oder gleich 0,18 g/cm$^3$ und kleiner oder gleich 0,41 g/cm$^3$.

**2.** Folie nach Anspruch 1, **dadurch gekennzeichnet, dass** die mikrometrische Dicke der Folie kleiner oder gleich 25 Mikrometer ist.

**3.** Folie nach Anspruch 1, **dadurch gekennzeichnet, dass** die mikrometrische Dicke der Folie kleiner oder gleich 20 Mikrometer ist.

**4.** Folie nach Anspruch 1, **dadurch gekennzeichnet, dass** das Beta-Nukleierungsmittel aus Gamma-Chinacridon besteht, das in einem Anteil von größer oder gleich 0,11 Gew.-% und kleiner oder gleich 0,5 Gew.-% vorhanden ist.

**5.** Folie nach einem der vorhergehenden Ansprüche, **dadurch gekennzeichnet, dass** die in den zwei Richtungen gestreckte Folie eine Porosität des Typs Gurley von größer oder gleich 50 Sekunden und kleiner oder gleich 300 Sekunden pro 100 cm$^3$ hat.

**6.** Folie nach einem der vorhergehenden Ansprüche, **dadurch gekennzeichnet, dass** die in den zwei Richtungen gestreckte Folie eine prozentuale Porosität von größer oder gleich 50% hat.

**7.** Folie nach einem der vorhergehenden Ansprüche, **dadurch gekennzeichnet, dass** die Folie einen Längs-Elastizitätsmodul von größer oder gleich 800 MPa gemäß der Norm ASTM D882 und/oder einen Quer-Elastizitätsmodul von größer oder gleich 300 MPa gemäß der Norm ASTM D882 hat.

**8.** Folie nach einem der vorhergehenden Ansprüche, **dadurch gekennzeichnet, dass** das Gemisch ferner Calciumstearat in einem Anteil von 25 bis 250 mg/kg des Gemischs umfasst.

**9.** Folie nach einem der vorhergehenden Ansprüche, **dadurch gekennzeichnet, dass** die Querschrumpfung der Folie mit einer mikrometrischen Dicke von kleiner oder gleich 20 μm bei 120°C kleiner als 8% ist.

**10.** Folie nach einem der vorhergehenden Ansprüche, **dadurch gekennzeichnet, dass** bei einer Temperatur von größer oder gleich 150 °C die Folie eine Porosität nach Gurley von größer oder gleich 5.000 Sekunden hat.

**11.** Verfahren zur Herstellung einer Trennfolie für eine Vorrichtung zum Speichern von elektrischer Energie nach einem der Ansprüche 1 bis 10, bei dem, im Laufe eines ersten Schritts, das Gemisch in geschmolzenem Zustand über eine Gießkühlwalze (CR, 13) geführt wird, die in Drehung versetzt wird und die eine Temperatur hat, die kleiner ist als die Temperatur des Gemischs in geschmolzenem Zustand, um eine Primärfolie (F) zu erhalten, die Primärfolie (F) im Laufe eines zweiten Schrittes nach dem ersten Schritt in ihrer Längsvorschubrichtung (MD) gestreckt wird, die Folie (F) in der Richtung (TD) quer zu der Längsrichtung (MD) gestreckt wird, wobei das Verfahren **dadurch gekennzeichnet ist, dass** beim ersten Schritt das Gemisch in geschmolzenem Zustand eine Kontaktzeit mit der Gießkühlwalze (CR, 13) von größer oder gleich 30 Sekunden hat.

**12.** Elektrischer Superkondensator, der mindestens zwei elektrische Leiter umfasst, die mit mindestens zwei Benutzungsklemmen verbunden sind, wobei sich mindestens eine poröse Trennfolie nach einem der Ansprüche 1 bis 10 und ein die Folie imprägnierender Elektrolyt zwischen den zwei elektrischen Leitern befinden.

**13.** Batterie zum Speichern von elektrischer Energie, die mindestens zwei elektrische Leiter umfasst, die mit mindestens zwei Benutzungsklemmen verbunden sind, wobei sich mindestens eine poröse Trennfolie nach einem der Ansprüche 1 bis 10 und ein die Folie imprägnierender Elektrolyt zwischen den zwei elektrischen Leitern befinden.

**14.** Elektrolytischer Kondensator, der eine Anode (A) und Kathode (CATH) umfasst, zwischen denen sich mindestens eine poröse Trennfolie nach einem der Ansprüche 1 bis 10 und ein die Folie imprägnierender Elektrolyt befinden.

**15.** Elektrolytischer Kondensator nach dem vorhergehenden Anspruch, wobei die Kathode durch eine metallische Abscheidung (M) auf einer einzigen Seite der mindestens einen porösen Folie gebildet ist.

**Claims**

**1.** A separator film for a device used for storing electrical energy, the film being porous and oriented, and being obtained by stretching in a longitudinal direction and in a direction transverse to the longitudinal direction, the film containing a mixture comprising:

  - a polypropylene homopolymer,
  - at least 10% by weight of at least one copolymer of monomers comprising at least propylene and ethylene,

- at least one beta-nucleating agent consisting of gamma-quinacridone,

**characterized in that**
the copolymer has an ethylene content greater than or equal to 1% and less than 10% by weight of the copolymer and a propylene content of at least 90% by weight of the copolymer for a micrometric thickness of the film greater than or equal to 8 microns and less than or equal to 30 microns, corresponding to a space factor determined according to the IEC-60674-3-1 standard greater than or equal to 145% and a density of the film stretched in both directions greater than or equal to 0.18 g/cm$^3$ and less than or equal to 0.41 g/cm$^3$.

2. The film according to claim 1, **characterized in that** the micrometric thickness of the film is less than or equal to 25 microns.

3. The film according to claim 1, **characterized in that** the micrometric thickness of the film is less than or equal to 20 microns.

4. The film according to claim 1, **characterized in that** the beta-nucleating agent consists of gamma-quinacridone in a proportion greater than or equal to 0.11% and less than or equal to 0.5% by weight.

5. The film according to any one of the preceding claims, **characterized in that** the film stretched in both directions has a Gurley porosity greater than or equal to 50 seconds and less than or equal to 300 seconds per 100 cm$^3$.

6. The film according to any one of the preceding claims, **characterized in that** the film stretched in both directions has a porosity in percent greater than or equal to 50%.

7. The film according to any one of the preceding claims, **characterized in that** the film has a longitudinal modulus of elasticity greater than or equal to 800 MPa according to the ASTM D882 standard and/or a transverse modulus of elasticity greater than or equal to 300 MPa according to the ASTM D882 standard.

8. The film according to any one of the preceding claims, **characterized in that** the mixture further comprises calcium stearate in a proportion of 25 to 250 mg/kg of mixture.

9. The film according to any one of the preceding claims, **characterized in that** the transverse shrinking of the film of micrometric thickness less than or equal to 20 $\mu$m at 120 °C is less than 8%.

10. The film according to any one of the preceding claims, **characterized in that** for a temperature greater than or equal to 150 °C, the film has a Gurley porosity greater than or equal to 5000 seconds.

11. A method for fabricating a separator film for a device used for storing electrical energy according to any one of the preceding claims,
Method in which, during a first step said mixture being melt is passed on a chill roll (CR, 13), which rotates and which has a temperature less than the temperature of the mixture being melt to obtain a primary film (F), the primary film (F) is stretched in its longitudinal conveying direction (MD) during a second step after the first step, the film (F) is stretched in the direction transverse (TD) to the longitudinal direction (MD), the method being **characterized in that** during the first step, said mixture being melt has a time in contact with the chill roll (CR, 13) greater than or equal to 30 seconds.

12. An electrical supercapacitor, comprising at least two electrical conductors connected to at least two use terminals, wherein at least one porous separator film according to any one of claims 1 to 10 and an electrolyte impregnating the film are between the two electrical conductors.

13. A battery for storing electrical energy, comprising at least two electrical conductors connected to at least two use terminals, wherein at least one porous separator film of any one of claims 1 to 10 and an electrolyte impregnating the film are between the two electrical conductors.

14. An electrolytic capacitor, comprising an anode (A) and a cathode (CATH), between which is located at least one porous separator film according to any one of claims 1 to 10 and an electrolyte impregnating the film.

15. An electrolytic capacitor according to the preceding claim, wherein the cathode is formed by a metal deposition (M) on only one face of said at least one porous film.

**FIG. 1**

Aire partielle : -108 J / g
17.8 min : 59.520 %

Pic de fusion de la phase β
du polypropylène (à environ 150°C)

Pic de fusion de
la phase ∝
du polypropylène
(à environ 165°C)

[1.2]

[1.2]

DSC / (mW / mg)

Température / °C

Temps / min

EP 2 517 286 B1

**FIG. 2**

**FIG. 3**

# FIG. 4

Contrainte (MPa) vs Déformation (%)

Curves labeled: Exemple 1 (invention), NKK TF4425, NKK TF4035

EP 2 517 286 B1

FIG. 5

x2,5k    30 µm

# FIG. 6

F10

F20

x2,5k 30 μm

# FIG. 7

F20

F

F10

## FIG. 8

## FIG. 9

**FIG. 10**

# FIG. 11

## FIG. 12

## FIG. 13

## FIG. 14

**MD**

## FIG. 15

**TD**

# FIG. 16

Retrait TD Vs Temperature

EP 2 517 286 B1

## FIG. 17

EP 2 517 286 B1

Retrait TD Vs Temperature

Retrait

Temperature (°C)

—— 100°C
—— 120°C
—— 135°C

FIG. 18

EP 2 517 286 B1

## RÉFÉRENCES CITÉES DANS LA DESCRIPTION

**Documents brevets cités dans la description**

- US 2005212183 A
- EP 1511797 A
- US 7235203 A
- US 3563971 A
- EP 492942 B
- JP 2008201814 A